# EUROPEAN PATENT SPECIFICATION

(11) **EP 1 091 373 B1**
(45) Date of publication and mention of the grant of the patent: **06.05.2004**
(21) Application number: 00126792.1
(22) Date of filing: 22.10.1998
(51) Int. Cl.: H01G 9/20

(54) **Photoelectric conversion device and photo-electrochemical cell**
Photoelektrische Umwandlungsanordnung und photoelektrochemische Zelle
Dispositif de conversion photoélectrique et cellule photoélectrochimique

(30) Priority: 23.10.1997 JP 29143297; 21.11.1997 JP 33811597; 17.07.1998 JP 21977498; 17.07.1998 JP 21977598
(43) Date of publication of application: 11.04.2001
(62) Divisional of application: 98120012.4
(73) Proprietor: Fuji Photo Film Co., Ltd., Kanagawa-ken (JP)
(72) Inventor: Shiratsuchi, Kentaro, Minami-Ashigara-shi, Kanagawa (JP); Tsukahara, Jiro, Minami-Ashigara-shi, Kanagawa (JP); Watanabe, Tetsuya, Minami-Ashigara-shi, Kanagawa (JP); Okazaki, Masaki, Minami-Ashigara-shi, Kanagawa (JP)
(74) Representative: Patentanwälte Dr. Solf & Zapf

(56) References cited:
- US-A- 5 237 031
- US-A- 5 643 490
- PATENT ABSTRACTS OF JAPAN vol. 016, no. 288 (E-1223), 25 June 1992 (1992-06-25) & JP 04 073803 A (MITSUBISHI PETROCHEM CO LTD), 9 March 1992 (1992-03-09)
- MATSUMOTO M ET AL: "A dye sensitized TiO2 photoelectrochemical cell constructed with polymer solid electrolyte" SOLID STATE IONICS, vol. 89, no. 3-4, 2 August 1996 (1996-08-02), page 263-267 XP004069984

## Description

This invention relates to a photoelectric conversion device, and more particularly, to a photoelectric conversion device comprising a dye-sensitized nanoparticulate semiconductor. It also relates to a photo-electrochemical cell.

### BACKGROUND OF THE INVENTION

With respect to the solar power generation, monocrystalline silicon solar batteries, polycrystalline silicon solar batteries, amorphous solar batteries, and compound solar batteries using cadmium telluride or indium copper selenide have been used in practice or become the major object of research and development. For the widespread use, problems including the manufacturing cost, the availability of source materials, and a long energy payback period must be solved. On the other hand, many solar batteries using organic materials intended for increasing the surface area and lowering the cost have also been proposed, but they have the drawbacks of low efficiency conversion and poor durability.

International Patent No. 93/20565 proposes a photoelectric conversion device using a solid electrolyte. JP-A 288142/1995, Solid State Ionics, 89 (1996), 263, and JP-A 27352/1997 propose photoelectric conversion devices using crosslinked polyethylene oxide solid polymer electrolytes for solidification. However, the photoelectric conversion devices using these solid electrolytes were found to experience a substantial decline of photoelectric conversion properties, especially short-circuiting current density and to be so tacky on their film surface that they are difficult to transport and handle during manufacture.

USP 4,927,721, 4,684,537, 5,084,365, 5,350,644, 5,463,057, 5,525,440 and JP-A 249790/1995 disclose photoelectric conversion devices using semiconductor nanoparticulates sensitized with dyes, which are often referred to as dye-sensitized photoelectric conversion devices, hereinafter, or materials and processes for preparing such converters. A first advantage of this system is that photoelectric conversion devices are obtained at a relatively low cost since inexpensive oxide semiconductors such as titanium dioxide can be used without a need for work-up to a high purity. A second advantage of this system is that photons in almost all the wavelength band of visible light can be converted into electric current since the dyes used have a broad absorption band. These features are advantageous when applied to photoelectric conversion devices for converting solar energy into electricity, that is, so-called solar batteries. Efforts have been made on the application to this field.

In order that dye-sensitized photoelectric conversion devices of this system operate at a high conversion efficiency, expensive ruthenium complex dyes must be used as the sensitizing dye, which is a potential barrier against commercial application. For this reason, there is a desire to have a photoelectric conversion device capable of high efficiency photoelectric conversion despite sensitization with inexpensive dyes such as organic dyes.

### SUMMARY OF THE INVENTION

An object of the present invention is to provide a dye-sensitized photoelectric conversion device having improved photoelectric conversion efficiency and durability, and a photo-electrochemical cell using the same.

The invention provides a photoelectric conversion device of the dye sensitization type comprising a conductive support, a layer coated on the conductive support and containing semiconductor nanoparticulates having a dye adsorbed thereto, a gel electrolyte layer containing a gel and an electrolyte, and a counter electrode. The gel of the gel electrolyte layer contains constituent units of at least one type having a monovalent organic residue selected from among a carbonate group, a heterocyclic group containing a nitrogen atom, and a quaternary ammonium salt.

The gel is typically a crosslinked polymer containing constituent units of at least one type having a monovalent organic residue selected from among a carbonate group, a heterocyclic group containing a nitrogen atom, and a quaternary ammonium salt. Preferably, the constituent units of the crosslinked polymer originate from an ethylenically unsaturated monomer. Further preferably, the ethylenically unsaturated monomer is at least one ethylenically unsaturated monomer having as a substituent a monovalent organic residue selected from among a carbonate group, a heterocyclic group containing a nitrogen atom, and a quaternary ammonium salt. The crosslinked polymer preferably contains, in a weight compositional ratio, 5 to 99% by weight of recurring units originating from the ethylenically unsaturated monomer.

Further preferably, the crosslinked polymer containing at least one type of recurring units originating from an ethylenically unsaturated monomer has the following formula (1): 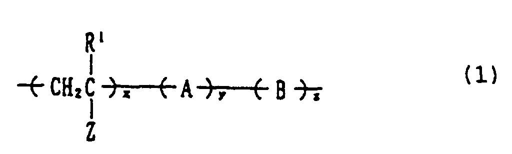 wherein R¹ is hydrogen or alkyl of 1 to 4 carbon atoms, Z is a monovalent organic group containing a functional group selected from among a carbonate group, a heterocyclic group containing a nitrogen atom, and a quaternary ammonium salt, A represents recurring units-derived from a compound containing an ethylenically unsaturated group, B represents recurring units derived from a compound containing at least two ethylenically unsaturated groups, letters x, y, and z represent weight compositional ratios of the recurring units associated therewith, respectively, x is from 5% to 99% by weight, y is from 0% to 70% by weight, and z is from 0.5% to 50% by weight. The ethylenically unsaturated monomer containing Z is preferably at least one member selected from among ethylene glycol carbonate methacrylate, N-vinyl pyrrolidone, N-vinyloxazolidone, and N-vinyl-N'-ethylimidazolium iodide. Preferably the crosslinked polymer accounts for a weight fraction of 2% to 80% by weight of the gel electrolyte.

The electrolyte is typically a metal iodide, an iodine salt of a quaternary ammonium compound, a metal bromide, a bromine salt of a quaternary ammonium compound, a sulfur compound, a viologen dye, or hydroquinone-quinone. The electrolyte is preferably present in a concentration of 0.1 to 1.5 M. The electrolyte is preferably a supporting electrolyte containing an iodine salt and/or a metal iodide.

The gel electrolyte preferably contains at least one organic solvent selected from among a nitrile compound, a carbonate compound, a nitrogenous heterocyclic compound, and an ethylene glycol dialkyl ether. Further preferably, the gel electrolyte has been prepared by radical polymerization of a mixture containing a vinyl monomer, a polymerization initiator, a supporting electrolyte, and a solvent.

A ruthenium complex dye or polymethine dye is typically used.

Also provided is a photo-electrochemical cell comprising the photoelectric conversion device defined above.

### BRIEF DESCRIPTION OF THE DRAWINGS

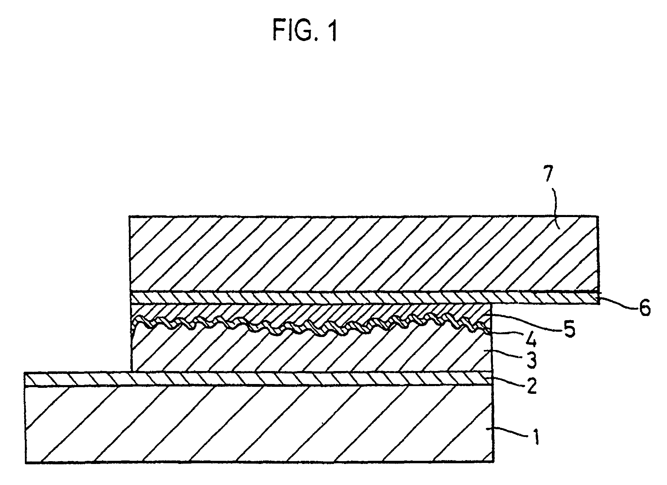

Fig. 1 is a diagrammatic sectional view showing the layer structure of a photo-electrochemical cell according to the invention.

### BEST MODE FOR CARRYING OUT THE INVENTION

The gel of the gel electrolyte layer in the photoelectric conversion device according to the invention contains constituent units of at least one type having a monovalent organic residue selected from among a carbonate group, a heterocyclic group containing a nitrogen atom, and a quaternary ammonium salt. The gel is preferably a crosslinked polymer.

Typically, the constituent units of the crosslinked polymer originates from an ethylenically unsaturated monomer, which is preferably at least one ethylenically unsaturated monomer having as a substituent a monovalent organic residue selected from among a carbonate group, a heterocyclic group containing a nitrogen atom, and a quaternary ammonium salt. Further preferably, the crosslinked polymer contains, in a weight compositional ratio, 5 to 99% by weight of recurring units originating from the ethylenically unsaturated monomer having the above-described substituent.

Preferably, the crosslinked polymer containing at least one type of recurring units originating from an ethylenically unsaturated monomer has the following formula (1) : 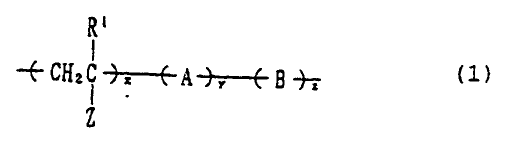 wherein R¹ is hydrogen or alkyl of 1 to 4 carbon atoms, Z is a monovalent organic group containing a functional group selected from among a carbonate group, a heterocyclic group containing a nitrogen atom, and a quaternary ammonium salt, A represents recurring units derived from a compound containing an ethylenically unsaturated group, B represents recurring units derived from a compound containing at least two ethylenically unsaturated groups, letters x, y, and z represent weight compositional ratios of the recurring units associated therewith, respectively, x is from 5% to 99% by weight, y is from 0% to 70% by weight, and z is from 0.5% to 50% by weight.

The dye-sensitized photoelectric conversion device is defined as comprising a conductive support, a layer coated on the conductive support and containing semiconductor nanoparticulates having a dye adsorbed thereto, which is also referred to as a photosensitive layer, a gel electrolyte layer, and a counter electrode,

The conductive supports may be metal supports which themselves are electrically conductive or supports of glass or plastics having a conductive agent layer on their surface. In the latter case, the preferred conductive agents are metals such as platinum, gold, silver, copper, aluminum, rhodium, and indium, carbon, and conductive metal oxides such as indium-tin compound oxide and tin oxide doped with fluorine. Especially preferred is a conductive glass support in the form of a transparent support of soda lime float glass having deposited thereon a conductive layer of fluorine-doped tin dioxide. The conductive agent layer is preferably about 0.02 µm to about 10 µm thick.

It is recommended that the conductive supports have a lower surface resistivity. The preferred range of surface resistivity is up to 100 Ω/cm², more preferably up to 40 Ω/cm².

It is also recommended that the conductive supports be substantially transparent. The term "substantially transparent" means that the light transmittance of the support is at least 10%, preferably at least 50%, more preferably at least 70%. As the transparent conductive support, glass or plastic supports having conductive metal oxide coated thereon are preferable. The coverage or weight of conductive metal oxide coated is preferably 0.1 to 100 g per square meter of the glass or plastic support. Where transparent conductive supports are used, it is desired that light enters the device from the support side.

In the photosensitive layer, nanoparticulates of metal chalcogenides (e.g., oxides, sulfides and selenides) or perovskite may be used as the nanoparticulate semiconductor. Examples of the metal chalcogenides include oxides of titanium, tin, zinc, tungsten, zirconium, hafnium, strontium, indium, cerium, yttrium, lanthanum, vanadium, niobium, and tantalum, cadmium sulfide, and cadmium selenide. Examples of the perovskite are strontium titanate and calcium titanate. Of these, titanium oxide, zinc oxide, tin oxide and tungsten oxide are especially preferred.

The semiconductor nanoparticulates preferably have a mean particle size of 5 to 200 nm, more preferably 8 to 100 nm, expressed by the diameter of a circle of equivalent area to the projected area of a primary particle.

Various methods are employable for coating semiconductor nanoparticulates to a conductive support. Exemplary methods are a method of applying a dispersion liquid or colloid solution of semiconductor nanoparticulates onto a conductive support, and a method of applying a semiconductor nanoparticulate precursor onto a conductive support and allowing the precursor to be hydrolyzed with moisture in air, thereby forming a semiconductor nanoparticulate coating. The dispersion liquid of semiconductor nanoparticulates can be prepared by such methods as grinding in a mortar, milling and dispersing in a mill, and synthesizing a semiconductor under such conditions that the semiconductor may precipitate in a solvent as nanoparticulates. The dispersing media may be water or various organic solvents such as methanol, ethanol, dichloromethane, acetone, acetonitrile, and ethyl acetate. In forming a dispersion, polymers, surfactants, acids or chelates may be used as the dispersant if necessary.

Semiconductor nanoparticulates are desired to have a greater surface area so that more dye may be adsorbed thereon. The semiconductor nanoparticulate layer as applied onto the support should preferably have a surface area which is greater than the projected area by a factor of at least 10, more preferably at least 100. No upper limit is imposed on the surface area although the upper limit is usually a multiplication factor of about 1,000.

In general, as the semiconductor nanoparticulate layer becomes thicker, the amount of the dye carried per unit projected area increases so that the capture rate of light becomes higher, but the loss by charge recombination becomes greater because the diffusion distance of generated electrons increases. For this reason, the semiconductor nanoparticulate layer has an appropriate range of thickness which is typically 0.1 to 100 µm. When the semiconductor nanoparticulate layer is used in a photo-electrochemical cell, an appropriate thickness is 1 to 30 µm, especially 3 to 20 µm. After coating on a support, semiconductor nanoparticulates may be fired in order to bring the particulates into electronic contact and improve the strength and the adhesion to the support of the coating. The preferred range of firing temperature is from 40°C to less than 700°C. Further, after firing, the semiconductor nanoparticulates may be subject to chemical plating in an aqueous solution of titanium tetrachloride or electrochemical plating in an aqueous solution of titanium trichloride, for the purpose of increasing the surface area of semiconductor nanoparticulates or increasing the purity in the vicinity of semiconductor nanoparticulates for increasing the efficiency of electron injection from the dye into the semiconductor nanoparticulates.

The coverage or weight of semiconductor nanoparticulates coated is preferably 0.5 to 500 g, more preferably 5 to 100 g per square meter of the support.

The dyes, also called chromophores or sensitizers, which are used in the present invention are preferably ruthenium complex dyes and/or polymethine dyes. Further preferably, the dyes have appropriate interlocking groups to surfaces of semiconductor nanoparticulates. Preferred interlocking groups include cyano, and PO₃H₂ groups, as well as chelating groups having π-conducting character such as oximes, dioximes, hydroxyquinolines, and alpha-keto enolates. Of these, PO₃H₂ groups are especially preferred.

Where ruthenium complex dyes are used in the practice of the invention, they are preferably of the following general formula (2).

(2) (X)ₙRuLLₐ

In formula (2), Ru is ruthenium, X is a ligand selected from the group consisting of Cl, SCN, H₂O, Br, I, CN, -NCO, and SeCN, letter n is equal to 1 or 2, preferably equal to 2, L and Lₐ each are an organic ligand selected from the following ligands L-1 to L-8.

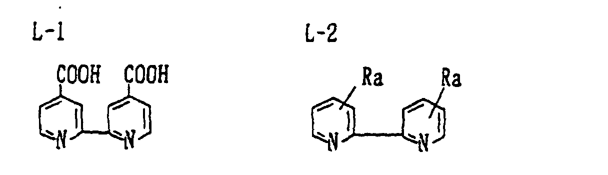

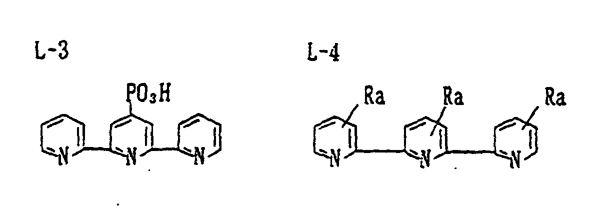

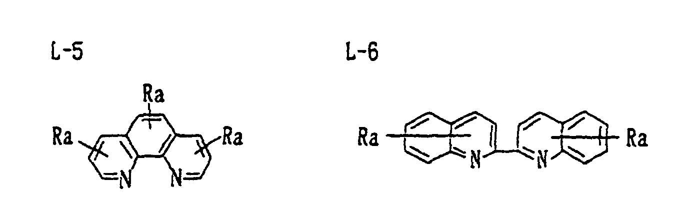

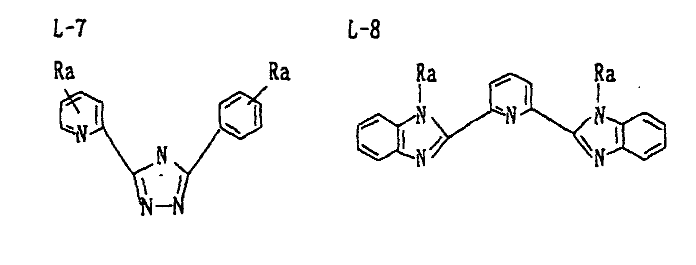

In the formulae, Ra is hydrogen, a halogen atom or a substituted or unsubstituted alkyl, aralkyl or aryl group having 1 to 12 carbon atoms.

The ruthenium complex dyes which can be used herein are, for example, the complex dyes described in USP 4,927,721, 4,684,537, 5,084,365, 5,350,644, 5,463,057, 5,525,440 and JP-A 249790/1995.

Preferred illustrative, non-limiting, examples of the ruthenium complex dyes which can be used herein are given below.

**Table 1**

| No. | X | n | L | La |
|---|---|---|---|---|
| R-1 | SCN | 2 | L-1 | L-1 |
| R-2 | CN | 2 | L-1 | L-1 |
| R-3 | Cl | 2 | L-1 | L-1 |
| R-4 | Br | 2 | L-1 | L-1 |
| R-5 | I | 2 | L-1 | L-1 |
| R-6 | SCN | 2 | L-1 | L-2 |
| R-7 | SCN | 1 | L-1 | L-3 |
| R-8 | Cl | 1 | L-1 | L-4 |
| R-9 | I | 2 | L-1 | L-5 |
| R-10 | SCN | 2 | L-1 | L-6 |
| R-11 | CN | 2 | L-1 | L-7 |
| R-12 | Cl | 1 | L-1 | L-8 |

Where polymethine dyes are used in the practice of the invention, they are preferably of the following general formula (3) or (4).

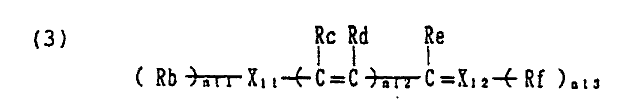

In formula (3), Rb and Rf are hydrogen, alkyl groups, aryl groups or heterocyclic residues, Rc to Re are hydrogen or substituents. Alternatively, Rb to Rf, taken together, may form a ring. X₁₁ and X₁₂ are nitrogen, oxygen, sulfur, selenium or tellurium. Letters n₁₁ and n₁₃ are integers of 0 to 2, and n₁₂ is an integer of 1 to 6. The compound of formula (3) may have a counter ion if necessary from the overall electric charge of its molecule.

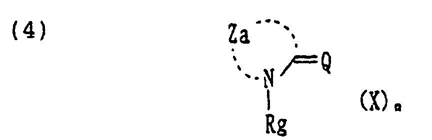

In formula (4), Za is a group of non-metallic atoms necessary to form a nitrogenous heterocycle. Rg is an alkyl or aryl group. Q is a methine or polymethine group necessary for the compound of formula (4) to become a methine dye. It is noted that Za, Rg and Q represent groups which enable the compound of formula (4) to have at least one substituent of the general formula (5). X is a charge equilibrating counter ion. Letter n is a number of 0 to 10 necessary to neutralize the electric charge of the molecule.

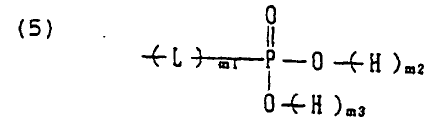

In formula (5), L is an oxygen atom, sulfur atom or amino group, letter m₁ is equal to 0 or 1, m₂ and m₃ each are equal to 0 or 1. Where m₂ or m₃ is 0, the substituent of formula (5) has a negative charge.

Illustrative examples of the polymethine dye are described in M. Okawara, T. Kitao, T. Hirasima & M. Matuoka, "Organic Colorants" (Elsevier).

Preferred, illustrative, non-limiting examples of the polymethine dyes of general formulae (3) and (4) are given below.

Examples of the dye of formula (3):

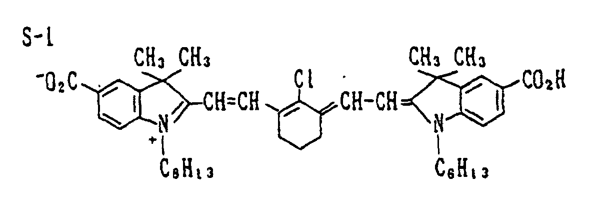

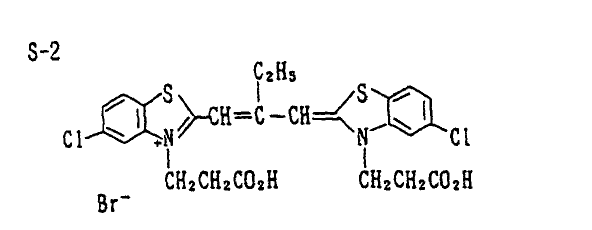

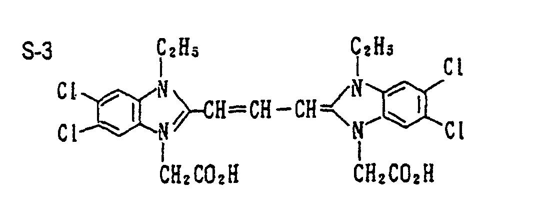

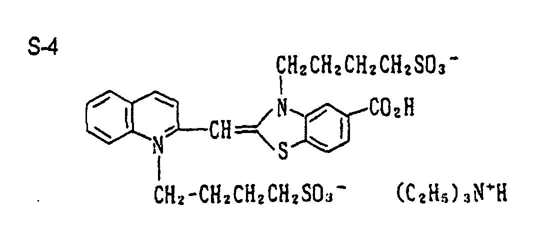

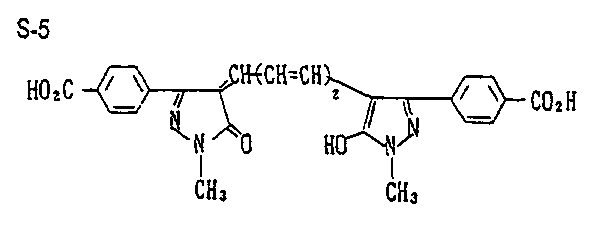

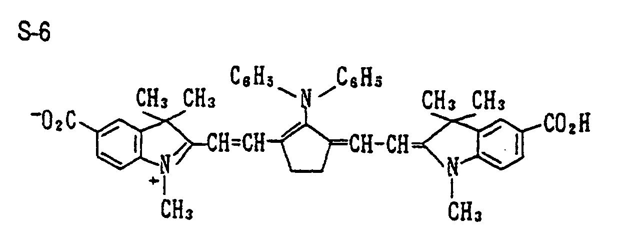

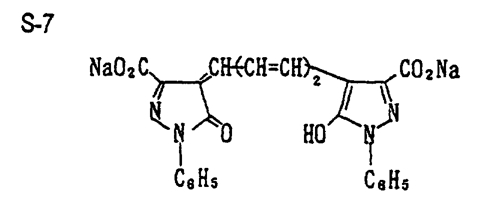

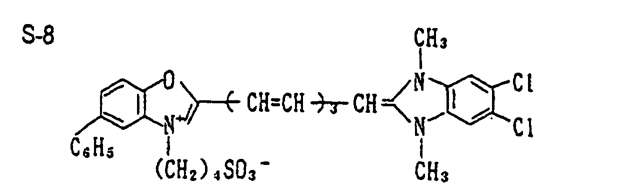

Examples of the dye of formula (4):

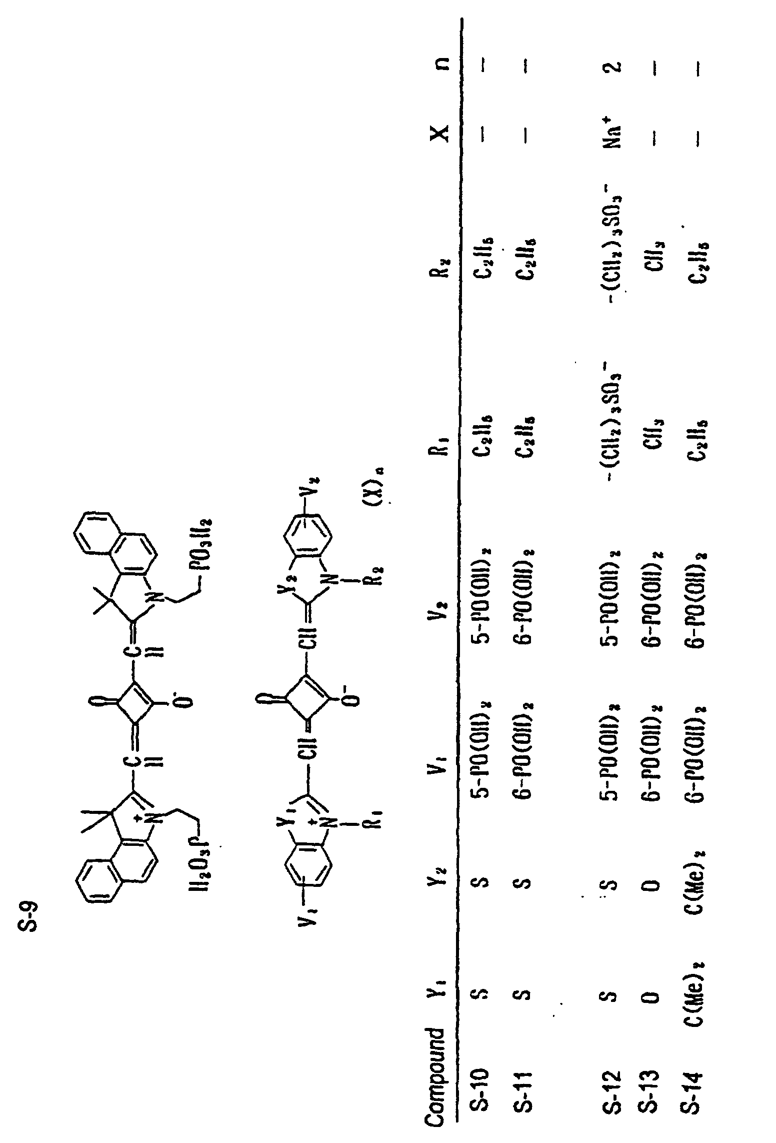

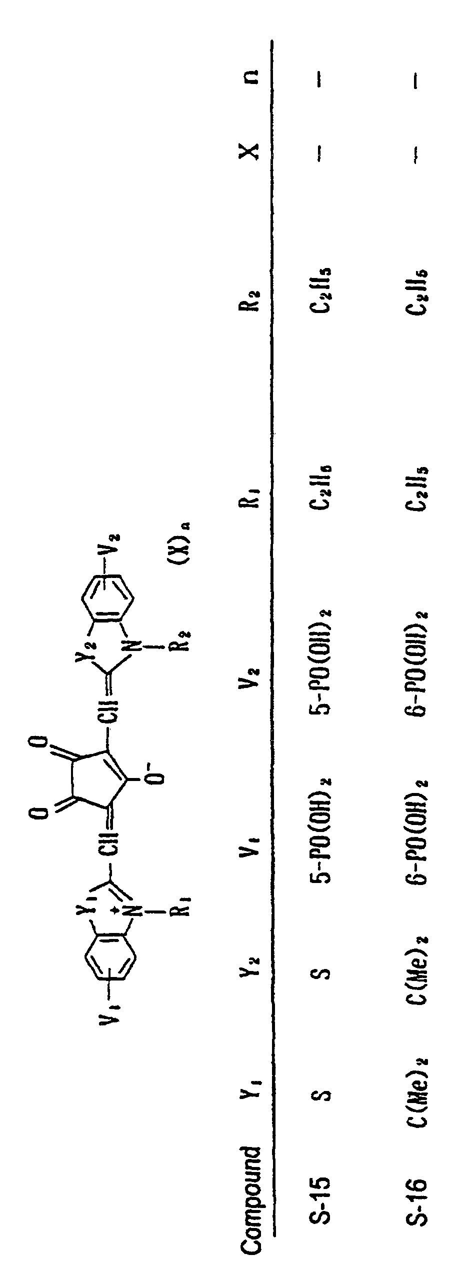

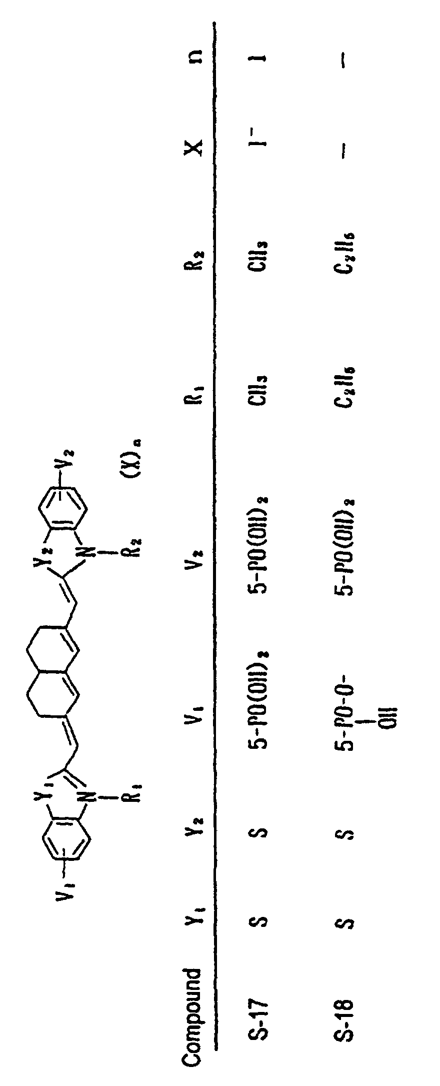

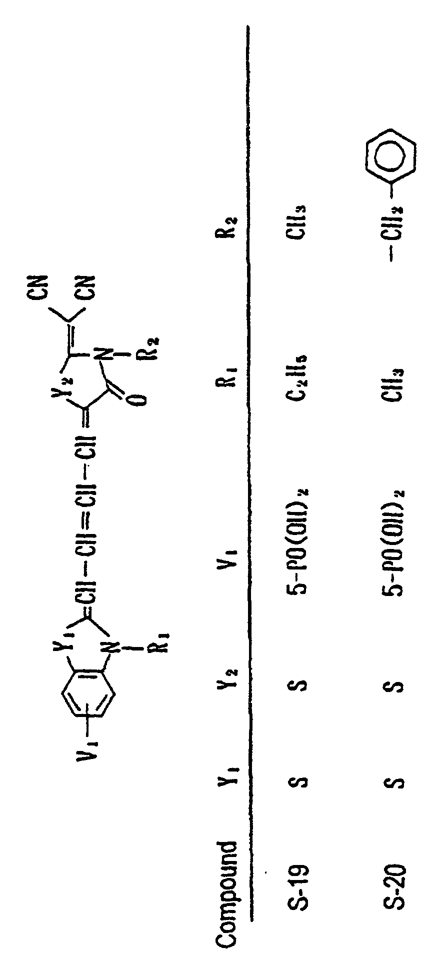

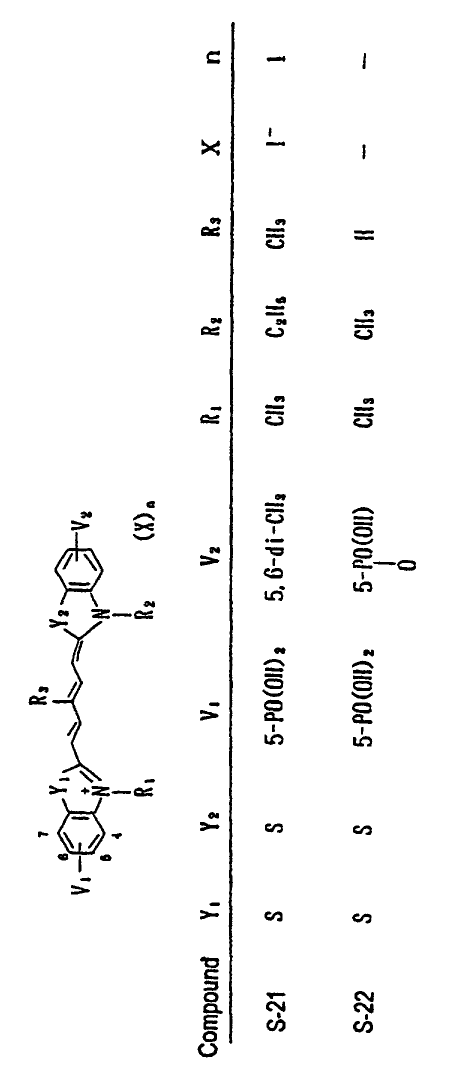

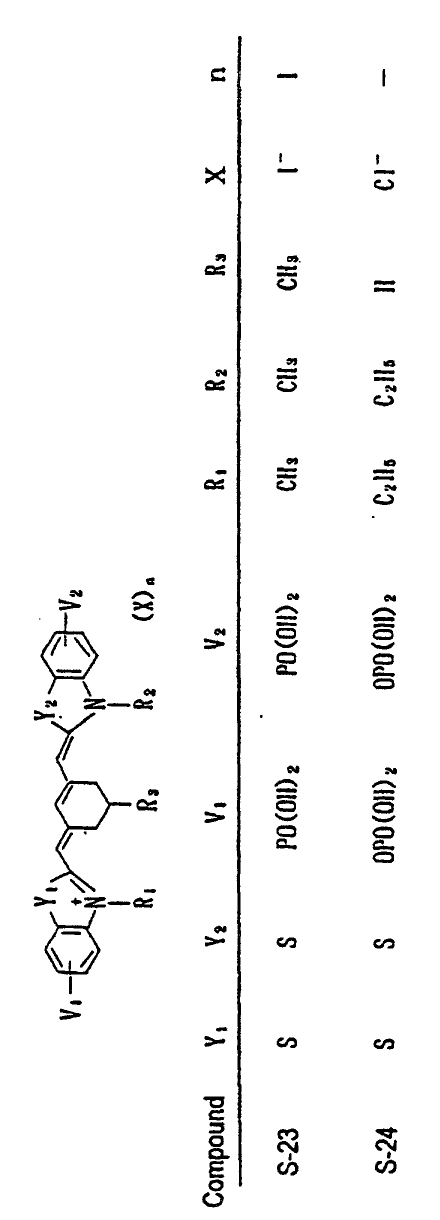

The compounds of general formulae (3) and (4) can be synthesized by the methods described in F.M. Harmer, Heterocyclic Compounds - Cyanine Dyes and Related Compounds, John Wiley & Sons, New York, London, 1964; D.M. Sturmer, Heterocyclic Compounds - Special topics in heterocyclic chemistry," Chap. 18, Sec. 14, pp. 482-515, John Wiley & Sons, New York, London, 1977; Rodd's Chemistry of Carbon Compounds, 2nd Ed., vol. IV, part B, 1977, Chap. 15, pp. 369-422, Elsevier Science Publishing Company Inc., New York; and British Patent No. 1,077,611.

The dye is adsorbed to semiconductor nanoparticulates, most often by immersing fully dry semiconductor nanoparticulates in a dye solution for several hours. The dye adsorption may be done at room temperature or by heating under reflux as described in JP-A 249790/1995. The dye adsorption may be done either prior to or subsequent to the coating of semiconductor nanoparticulates. It is also acceptable that semiconductor nanoparticulates and the dye are simultaneously coated whereupon adsorption takes place. It is desirable to remove the unadsorbed dye by washing. Where the coated film is fired, it is preferred that the dye adsorption be done subsequent to firing. It is especially preferred that the dye is quickly adsorbed to the coated film after firing and before water adsorbs to the surface of the coated film. For adsorption, a single dye or a mixture of dyes may be used. For the application to photo-electrochemical cells, dyes are selected and mixed so as to make the wavelength range of photoelectric conversion as broad as possible.

Also for the purpose of reducing the association or interaction between dyes, a colorless compound may be co-adsorbed. Hydrophobic compounds to be co-adsorbed are steroid compounds having a carboxyl group, e.g., cholic acid.

After the adsorption of the dye, the semiconductor nanoparticulates may be surface treated with amines. Preferred amines are pyridine, 4-tert-butylpyridine and polyvinylpyridine. The amines may be used as such if they are liquid or as solutions in organic solvents.

The gel used herein designates a state that colloid particles or polymeric solutes have lost independent mobility due to their interaction, coalesced to have a structure and solidified. The gel electrolytes including crosslinked polymers used in the invention are now described in detail. The gel electrolyte of the invention is represented by formula (1).

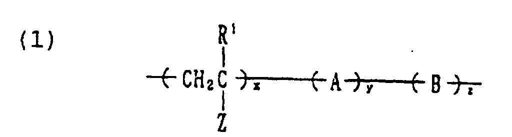

Herein R¹ is hydrogen or alkyl of 1 to 4 carbon atoms. Preferably, R¹ is hydrogen or methyl.

Z is a monovalent organic group containing a functional group selected from among a carbonate group, a heterocyclic group containing a nitrogen atom, and a quaternary ammonium salt. Preferably the organic groups represented by Z have 2 to 20 carbon atoms. Where Z contains a carbonate group, the preferred recurring units have the structure of the following formula (6).

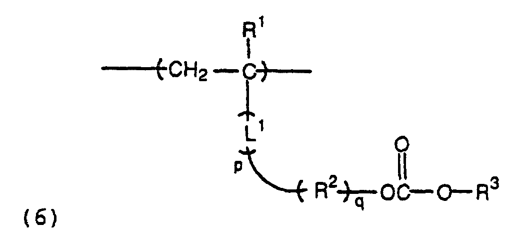

Herein R¹ is hydrogen or alkyl of 1 to 4 carbon atoms. Preferably, R¹ is hydrogen or methyl. L¹ represents COO, OCO, CONR⁴, NR⁵CO or phenylene groups wherein R⁴ and R⁵ each are hydrogen or alkyl of 1 to 4 carbon atoms and preferably, hydrogen or methyl. R² is alkylene of 1 to 12 carbon atoms. R³ is hydrogen or alkyl of 1 to 4 carbon atoms. R³ may form a ring with R². Letters p and q each are equal to 0 or 1.

Where Z contains a heterocycle having a nitrogen atom, the heterocycle is preferably selected from pyrrolidone, imidazole, pyridine, morpholine, piperidine, succinimide, oxazolidone, and 5-methyloxazolidone. In this case, the ethylenically unsaturated group may be attached to the nitrogen atom in the heterocycle directly or via a linking group to constitute the recurring units.

Where Z is selected from quaternary ammonium salts, the preferred recurring units have the structure of the following general formula (7), (8), (9) or (10).

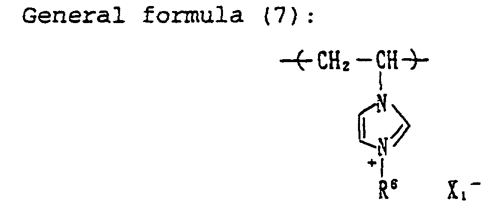

Herein, R⁶ represents substituted or unsubstituted alkyl, aralkyl, alkenyl and alkynyl groups having 1 to 20 carbon atoms. Preferably R⁶ represents normal or branched alkyl or aralkyl groups having 1 to 12 carbon atoms. X₁⁻ is a halide ion such as Cl⁻, Br⁻ or I⁻, and preferably I⁻.

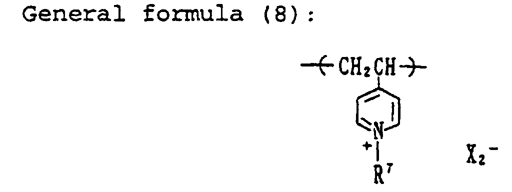

Herein, R⁷ represents substituted or unsubstituted alkyl, aralkyl, alkenyl and alkynyl groups having 1 to 20 carbon atoms. Preferably R⁷ represents normal or branched alkyl or aralkyl groups having 1 to 12 carbon atoms. X₂⁻ is a halide ion such as Cl⁻, Br⁻ or I⁻, and preferably I⁻.

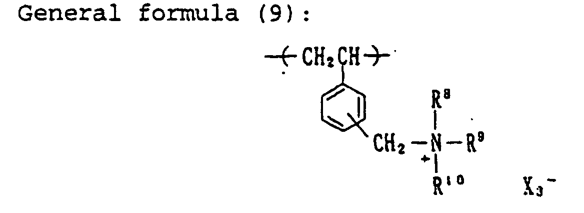

Herein, R⁸, R⁹, and R¹⁰ represent substituted or unsubstituted alkyl, aralkyl, alkenyl and alkynyl groups having 1 to 20 carbon atoms. R⁸, R⁹, and R¹⁰ may be the same or different, and may form a ring together. Preferably the groups represented by R⁸, R⁹, and R¹⁰ have 1 to 12 carbon atoms. X₃⁻ is a halide ion such as Cl⁻, Br⁻ or I⁻, and preferably I⁻.

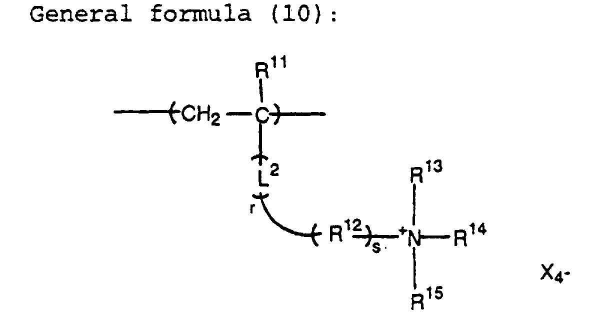

Herein, R¹¹ represents hydrogen or alkyl of 1 to 4 carbon atoms. Preferably R¹¹ represents hydrogen or methyl. L² represents COO, OCO, CONR¹⁶, NR¹⁷CO or phenylene groups wherein R¹⁶ and R¹⁷ each are hydrogen or alkyl of 1 to 4 carbon atoms. R¹² is alkylene of 1 to 12 carbon atoms. R¹³, R¹⁴, and R¹⁵ represent substituted or unsubstituted alkyl, aralkyl, alkenyl and alkynyl groups having 1 to 20 carbon atoms. R¹³, R¹⁴, and R¹⁵ may be the same or different, and may form a ring together. Preferably the groups represented by R¹³, R¹⁴, and R¹⁵ have 1 to 12 carbon atoms. X₄⁻ is a halide ion such as Cl⁻, Br⁻ or I⁻, and preferably I⁻. Letters r and s each are equal to 0 or 1.

The weight compositional ratio x that the recurring units containing Z account for in the crosslinked polymer is preferably from 5% to 99% by weight, more preferably 20% to 95% by weight. The recurring units containing Z may be a combination of recurring units containing a carbonate group, recurring units containing a nitrogenous heterocycle, and recurring units containing a quaternary ammonium salt.

Referring back to formula (1), A represents recurring units derived from a compound containing an ethylenically unsaturated group. Preferred examples of the compound containing an ethylenically unsaturated group from which recurring units represented by A are derived include
esters and amides derived from acrylic acid or α-alkylacrylic acids (e.g., methacrylic acid), for example, N-i-propylacrylamide, N-n-butylacrylamide, N-t-butylacrylamide, N,N-dimethylacrylamide, N-methylmethacrylamide, acrylamide, 2-acrylamide-2-methylpropanesufonic acid, methacrylamide, diacetone acrylamide, N-methylol acrylamide, N-methylol methacrylamide, methyl acrylate, ethyl acrylate, hydroxyethyl acrylate, n-propyl acrylate, i-propyl acrylate, 2-hydroxypropyl acrylate, 2-methyl-2-nitropropyl acrylate, n-butyl acrylate, i-butyl acrylate, t-butyl acrylate, t-pentyl acrylate, 2-methoxyethyl acrylate, 2-ethoxyethyl acrylate, 2-methoxymethoxyethyl acrylate, 2,2,2-trifluoroethyl acrylate, 2,2-dimethylbutyl acrylate, 3-methoxybutyl acrylate, ethylcarbitol acrylate, phenoxyethyl acrylate, n-pentyl acrylate, 3-pentyl acrylate, octafluoropentyl acrylate, n-hexyl acrylate, cyclohexyl acrylate, cyclopentyl acrylate, cetyl acrylate, benzyl acrylate, n-octyl acrylate, 2-ethylhexyl acrylate, 4-methyl-2-propylpentyl acrylate, heptadecafluorodecyl acrylate, n-octadecyl acrylate, methyl methacrylate, 2,2,2-trifluoroethylethyl methacrylate, tetrafluoropropyl methacrylate, hexafluoropropyl methacrylate, hydroxyethyl methacrylate, 2-hydroxypropyl methacrylate, i-butyl methacrylate, sec-butyl methacrylate, n-octyl methacrylate, 2-methoxyethyl methacrylate, 2-ethoxyethyl methacrylate, benzyl methacrylate, heptadecafluorodecyl methacrylate, n-octadecyl methacrylate, 2-isobornyl methacrylate, 2-norbornylmethyl methacrylate, 5-norbornene-2-ylmethyl methacrylate, 3-methyl-2-norbornylmethyl methacrylate, and dimethylaminoethyl methacrylate;
acrylic acid or α-alkylacrylic acids (e.g., acrylic acid, methacrylic acid, and itaconic acid); vinyl esters (e.g., vinyl acetate); esters derived from maleic acid or fumaric acid (e.g., dimethyl maleate, dibutyl maleate, and diethyl fumarate); sodium salts of maleic acid, fumaric acid, and p-styrenesulfonic acid; acrylonitrile, methacrylonitrile, dienes (e.g., butadiene, cyclopentadiene, and isoprene), aromatic vinyl compounds (e.g., styrene, p-chlorostyrene, t-butylstyrene, α-methylstyrene, and sodium styrenesulfonate), N-vinylformamide, N-vinyl-N-methylformamide, N-vinylacetamide, N-vinyl-N-methylacetamide, vinylsulfonic acid, sodium vinylsulfonate, sodium allylsulfonate, sodium methallylsulfonate, vinylidene fluoride, vinylidene chloride, vinyl alkyl ethers (e.g., methyl vinyl ether), ethylene, propylene, 1-butene, isobutene, and N-phenylmaleimide.

These compounds having an ethylenically unsaturated group may be used in combination. Other compounds having an ethylenically unsaturated group are described in *Research Disclosure*, No. 1955 (July 1980). The weight compositional ratio y that the recurring units represented by A (derived from the compound having an ethylenically unsaturated group) account for in the crosslinked polymer is preferably from 0% to 70% by weight, more preferably 0% to 50% by weight.

In formula (1), B represents recurring units derived from a compound containing at least two ethylenically unsaturated groups. Examples of the compound containing at least two ethylenically unsaturated groups include divinyl benzene, 4,4'-isopropylidene diphenylene diacrylate, 1,3-butylene diacrylate, 1,3-butylene dimethacrylate, 1,4-cyclohexylene dimethylene dimethacrylate, diethylene glycol dimethacrylate, diisopropylidene glycol dimethacrylate, divinyloxymethane, ethylene glycol diacrylate, ethylene glycol dimethacrylate, diethylene glycol diacrylate, diethylene glycol dimethacrylate, ethylidene diacrylate, ethylidene dimethacrylate, allyl acrylate, allyl methacrylate, 1,6-diacrylamidehexane, N,N'-methylene bisacrylamide, N,N'-(1,2-dihydroxy)ethylene bisacrylamide, 2,2-dimethyl-1,3-trimethylene dimethacrylate, phenylethylene dimethacrylate, tetraethylene glycol dimethacrylate, tetramethylene diacrylate, tetramethylene dimethacrylate, 2,2,2-trichloroethylidene dimethacrylate, triethylene glycol diacrylate, pentaerythritol triacrylate, trimethylol propane triacrylate, tetramethylolmethane tetracrylate, triethylene glycol dimethacrylate, 1,3,5-triacryloylhexahydro-s-triazine, bisacrylamidoacetic acid, ethylidyne trimethacrylate, propylidyne triacrylate, and vinyl allyloxyacetate. Inter alia, divinyl benzene, ethylene glycol dimethacrylate, ethylene glycol diacrylate, ethylene glycol dimethacrylate, diethylene glycol diacrylate, diethylene glycol dimethacrylate, triethylene glycol diacrylate, and triethylene glycol dimethacrylate are preferred. The weight compositional ratio z that the recurring units represented by B (derived from the compound having ethylenically unsaturated groups) account for in the crosslinked polymer is preferably from 0.5% to 50% by weight, more preferably 1.0% to 30% by weight.

Preferably, the crosslinked polymer accounts for a weight fraction of 2.0% to 80% by weight, more preferably 3.0% to 60% by weight of the gel electrolyte according to the invention.

Preferred, non-limiting, examples of the crosslinked polymer constituting the gel electrolyte according to the invention are given below. In the following formulas, x, y and other suffixes represent weight compositional ratios.

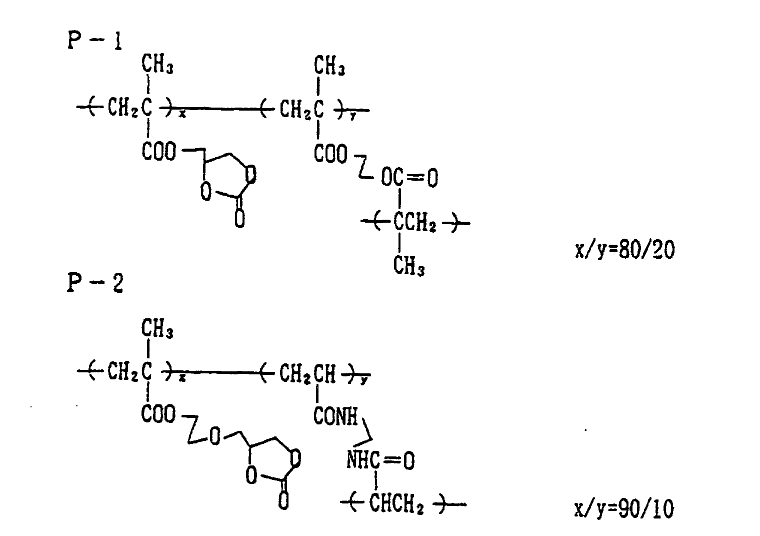

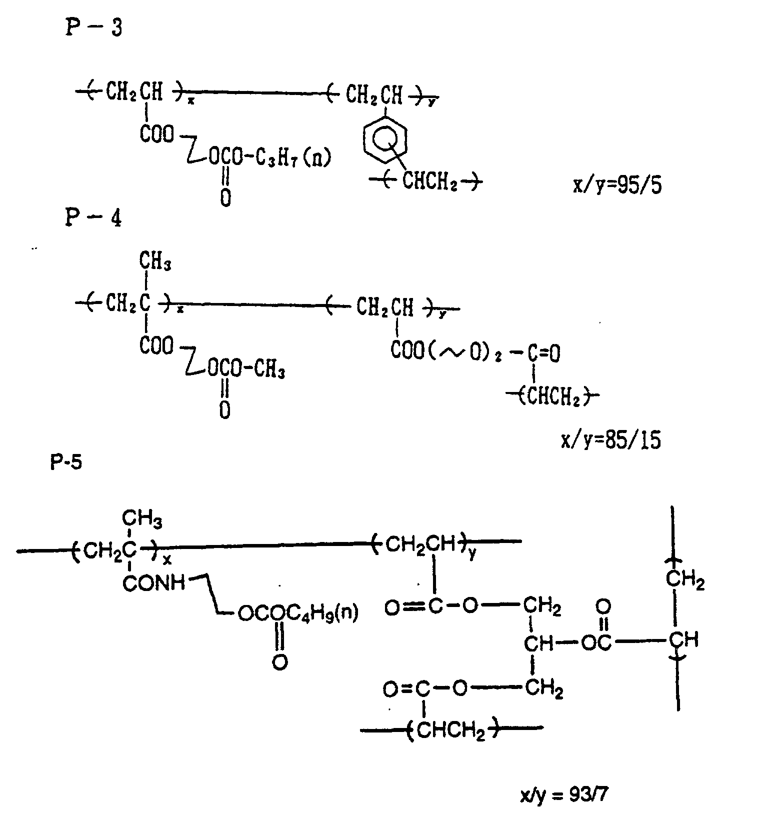

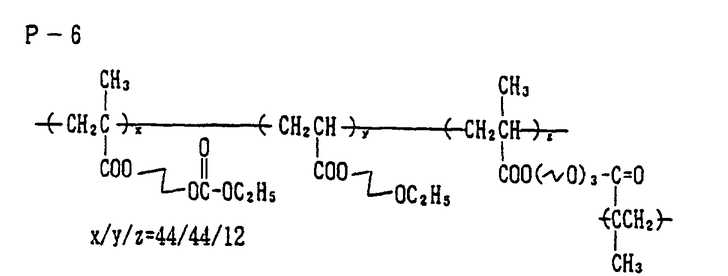

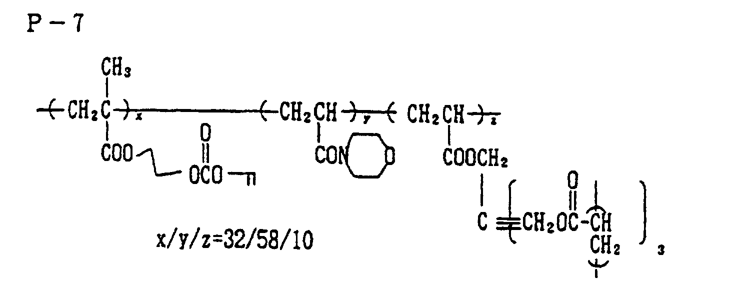

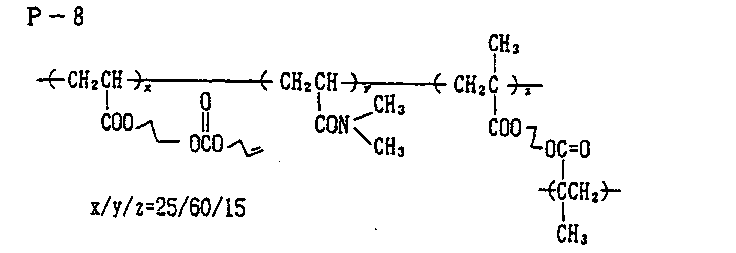

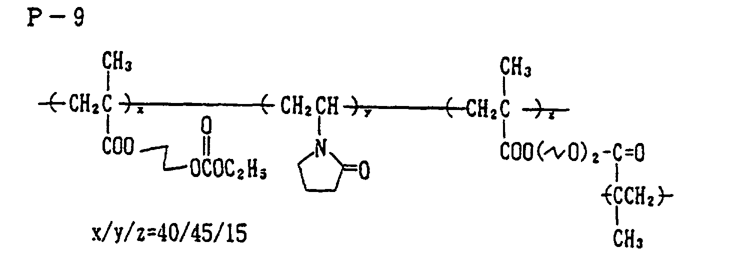

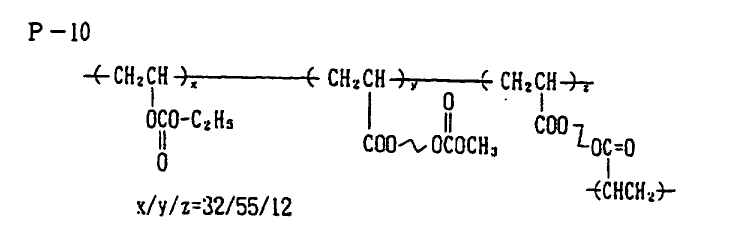

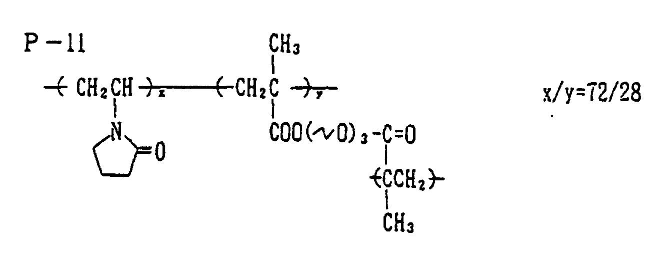

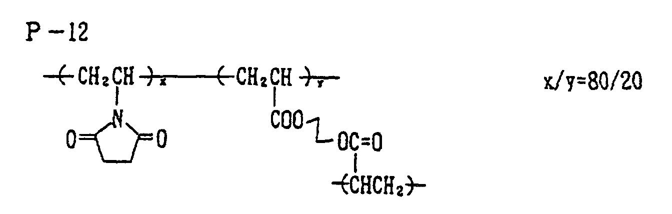

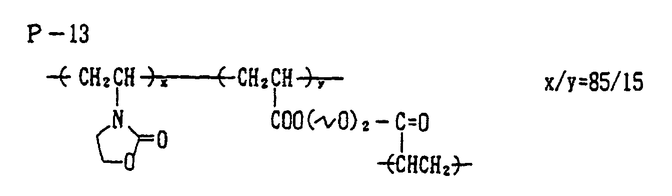

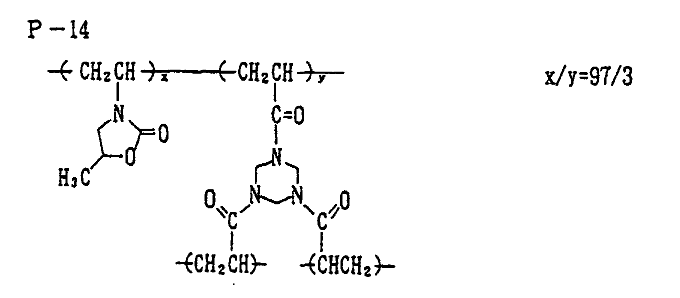

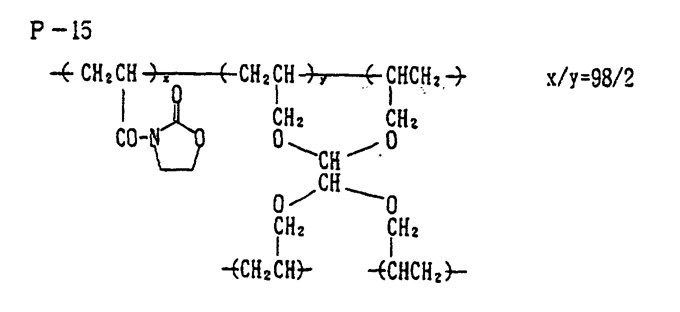

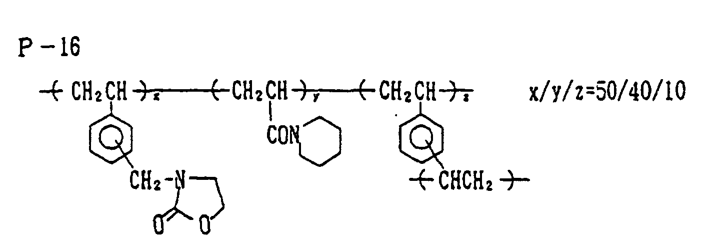

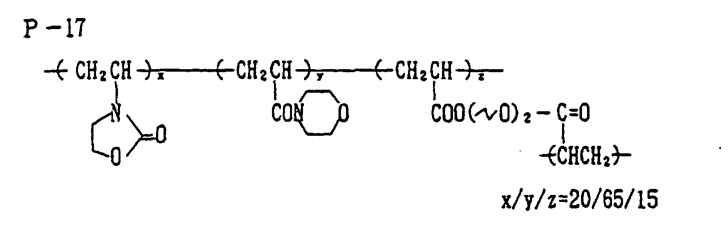

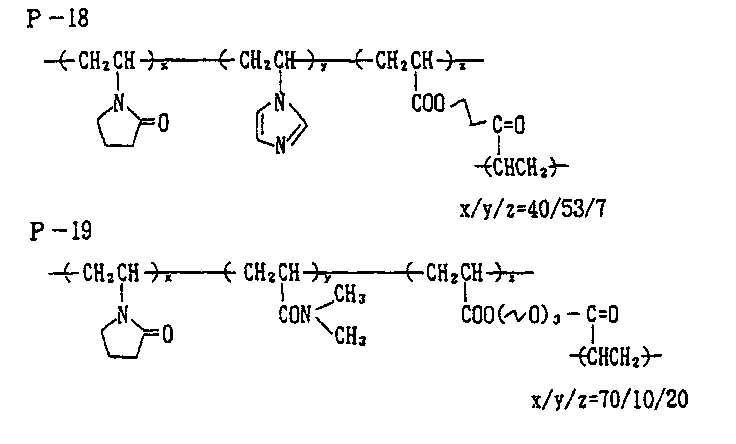

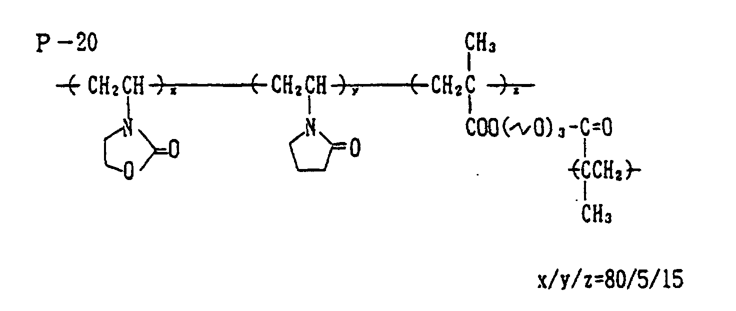

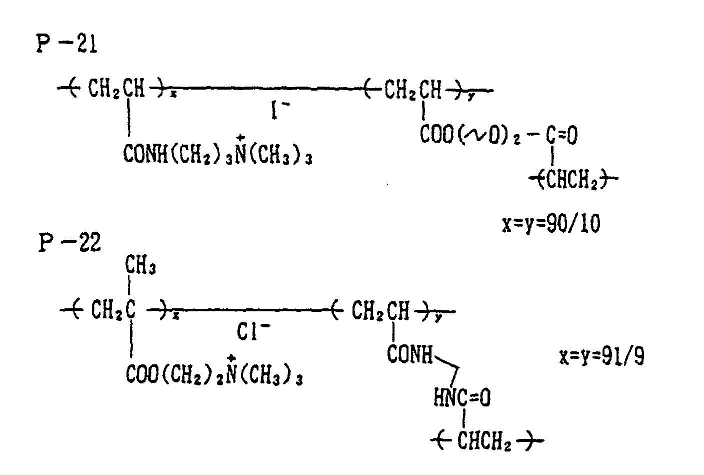

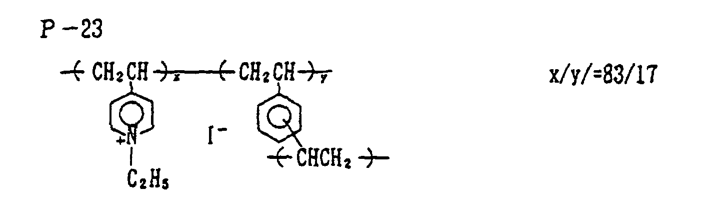

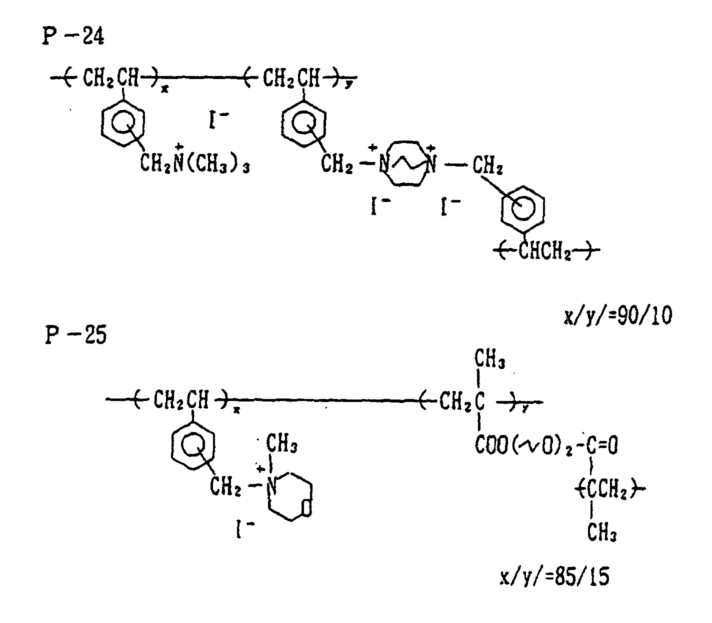

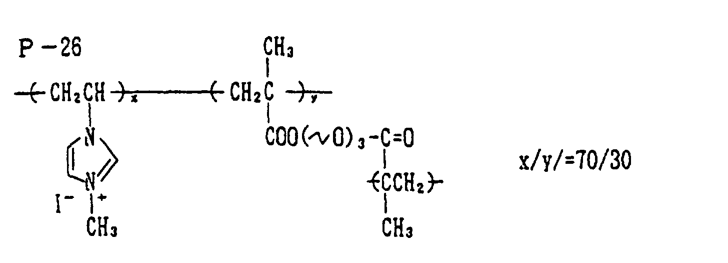

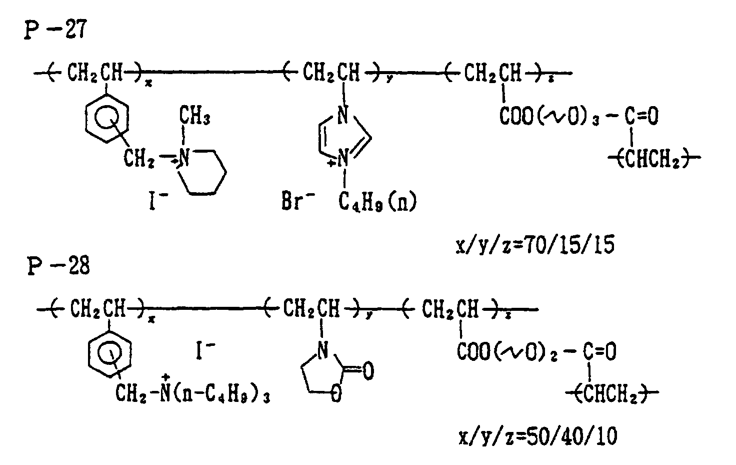

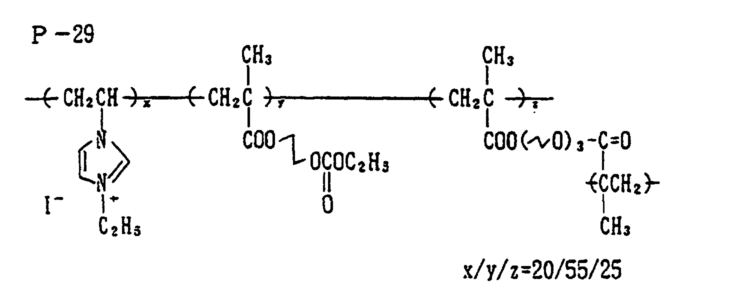

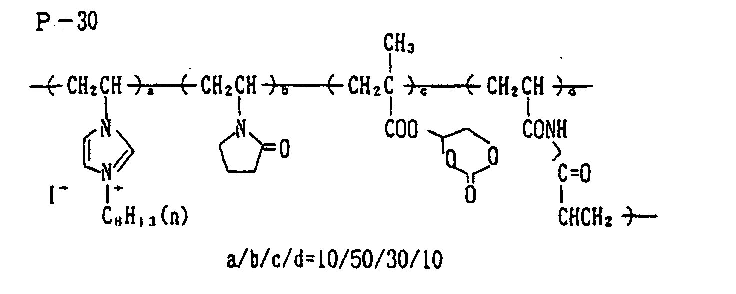

The crosslinked polymers used herein can be synthesized by radical polymerization which is one of ordinary polymer synthesis processes as described in T. Ohtsu and M. Kinoshita, "Experiments of Polymer Synthesis," Kagaku Dojin K.K., 1972, and T. Ohtsu, "Polymerization Reaction Theory 1, Radical Polymerization (I)," Kagaku Dojin K.K. The crosslinked polymers used herein can also be synthesized by radical polymerization assisted by thermal, optical, electron beam or electrochemical means, especially thermally assisted radical polymerization. When the crosslinked polymers used herein are formed by thermally assisted radical polymerization, there are used polymerization initiators, examples of which include azo initiators such as 2,2'-azobisisobutyronitrile, 2,2'-azobis(2,4-dimethylvaleronitrile), and dimethyl-2,2'-azobis(2-methylpropionate)-(dimethyl-2,2'-azobisisobutyrate), and peroxide initiators such as lauryl peroxide, benzoyl peroxide, and tert-butyl peroctoate. The polymerization initiator is preferably added in an amount of 0.01 to 20% by weight, more preferably 0.1 to 10% by weight of the total weight of monomers.

Typically, the gel electrolyte used in the device according to the invention is constructed by the crosslinked polymer, an electrolyte and a solvent. The latter two are now described.

The electrolytes used herein include metal iodides such as LiI, NaI, KI, CsI, and CaI₂; iodine salts of quaternary ammonium compounds such as tetraalkylammonium iodide and pyridinium iodide; Br₂ and metal bromides such as LiBr, NaBr, KBr, CsBr, and CaBr₂; Br₂ and bromine salts of quaternary ammonium compounds such as tetraalkyl ammonium bromides and pyridinium bromide; metal complexes such as ferrocyanateferricyanate salts and ferrocene-ferricinium ions; sulfur compounds such as sodium polysulfide and alkylthiolalkyldisulfides; viologen dyes, and hydroquinone-quinone. Of these, metal iodides such as LiI, NaI, KI, CsI, and CaI₂, and iodine salts of quaternary ammonium compounds such as tetraalkylammonium iodide and pyridinium iodide are preferred electrolytes. The electrolyte is preferably present in a concentration of 0.1 M to 1.5 M, more preferably 0.1 M to 0.8 M. It is possible to preform an oxidation-reduction pair by adding iodine to the electrolyte of the invention, the concentration of iodine added being preferably 0.01 M to 0.2 M.

The solvent used in the gel electrolyte used in the device according to the invention is desirably a compound having a low viscosity and improving an ion mobility, or having a high dielectric constant and improving an effective carrier concentration so that good ionic conductivity is exerted. Such solvents are exemplified by carbonate compounds such as ethylene carbonate and propylene carbonate; heterocyclic compounds such as 3-methyl-2-oxazolidinone; ether compounds such as dioxane and diethyl ether; chain ethers such as ethylene glycol dialkyl ethers, propylene glycol dialkyl ethers, polyethylene glycol dialkyl ethers and polypropylene glycol dialkyl ethers; alcohols such as methanol, ethanol, ethylene glycol monoalkyl ethers, propylene glycol monoalkyl ethers, polyethylene glycol monoalkyl ethers, and polypropylene glycol monoalkyl ethers; polyhydric alcohols such as ethylene glycol, propylene glycol, polyethylene glycol, polypropylene glycol, and glycerin; nitrile compounds such as acetonitrile, glutaronitrile, methoxyacetonitrile, propionitrile, and benzonitrile; aprotic polar compounds such as dimethyl sulfoxide and sulfolane; and water. Of these, carbonate compounds such as ethylene carbonate and propylene carbonate; heterocyclic compounds such as 3-methyl-2-oxazolidinone; and nitrile compounds such as acetonitrile, glutaronitrile, methoxyacetonitrile, propionitrile, and benzonitrile are especially preferred.

The gel electrolyte used in the device according to the invention is preferably prepared by mixing monomers to form the crosslinked polymer, a polymerization initiator, an electrolyte and a solvent to form a solution, applying the solution onto a dye-carrying electrode as by casting, coating, dipping or impregnation, to thereby form a sol-like electrolyte layer on the electrode, and effecting radical polymerization for gelation to form a gel electrolyte layer.

When the gel electrolyte layer is formed by coating, a coating solution is first prepared by adding a coating modifier (e.g., a leveling agent) and other additives to the solution containing the monomers, polymerization initiator, and electrolyte in solvent. The coating solution is applied by suitable techniques, such as spin coating, dip coating, air knife coating, curtain coating, roller coating, wire bar coating, gravure coating, extrusion coating using the hopper described in USP 2,681,294, and multi-layer co-coating as described in USP 2,761,418, 3,508,947 and 2,761,791. Thereafter, radical polymerization is carried out to form a gel electrolyte. The polymerization temperature may be determined as appropriate depending on the half-life temperature of the initiator, the heat resistant temperature of the dye, and the like although an appropriate temperature is often 10 to 150°C. When a compound in reduced state such as iodine is introduced into the electrolyte, this compound can serve as a polymerization inhibitor to inhibit polymerization of the monomers. The compound in reduced state such as iodine may be introduced into the gel electrolyte after its formation by a technique of placing a sample containing the gel electrolyte and the compound in reduced state such as iodine in a sealed container, and allowing the compound to diffuse into the gel electrolyte. The compound in reduced state such as iodine can also be incorporated into the device by coating or vapor depositing the compound to the counter electrode.

The counter electrode serves as a positive electrode in a photo-electrochemical cell. The counter electrode is usually of the same definition as the conductive support described above. In the case of a strength-sustainable construction, the support is not always necessary. The provision of the support is advantageous from the sealing aspect.

In order that light reach the photosensitive layer, at least one of the conductive support and the counter electrode must be substantially transparent. The photo-electrochemical cell of the invention favors the construction that the conductive support is transparent and sunlight is incident on the support side. Better results are obtained in this embodiment when the counter electrode has light reflecting property.

The counter electrode in the regenerative photo-electrochemical cell may be a glass or plastic member having a metal or conductive oxide evaporated thereon. Alternatively, a metal thin film may be formed by evaporation or sputtering to a thickness of up to 1 µm, preferably 5 to 200 nm. In one preferred embodiment, a glass member having platinum evaporated thereon or a metal thin film formed by evaporation or sputtering is used as the counter electrode.

The photosensitive layer is designed in accordance with the intended application and may have a single layer construction or a multilayer construction. The dye in one photosensitive layer may be a single dye or a mixture of dyes.

In the regenerative photo-electrochemical cell of the invention, the side of the cell may be sealed with a polymer or adhesive for preventing oxidative degradation of the components.

### EXAMPLE

Examples of the invention are given below for illustrating the preparation of a dye-sensitized photoelectric conversion device and a regenerative photo-electrochemical cell according to the invention, but the invention is not limited to these examples.

### Example 1

### 1. Preparation of titanium dioxide dispersion

A stainless steel vessel having an internal volume of 200 ml and lined on the inside surface with Teflon was charged with 15 g of titanium dioxide (Degussa P-25 by Nippon Aerosil K.K.), 45 g of water, 1 g of a dispersant (Triton X-100 by Aldrich), and 30 g of zirconia beads having a diameter of 0.5 mm (Nikkato K.K.). Using a sand grinder mill (Imex K.K.), the contents were dispersed at 1,500 rpm for 2 hours. The zirconia beads were removed from the dispersion by filtration.

### 2. Preparation of dye-adsorbed TiO₂ electrode (Electrode A)

On the conductive surface side of a conductive glass piece coated with fluorine-doped tin oxide (TCO glass by Asahi Glass K.K. cut to 20 mm x 20 mm), the dispersion prepared above was applied using a glass bar. More particularly, eight glass pieces were closely arranged in two columns (2x4) with the conductive surface side faced upward. Adhesive tape strips were attached to opposite end portions (3 mm from the end) of the two columns of glass pieces. The dispersion was applied to the set of eight glass pieces between the tape strips and spread thereon by sliding a glass bar on the parallel tape strips which serve as a spacer and mask. After application, the adhesive tape strips were peeled off, and the coating was air dried for one day at room temperature. The end portions where the adhesive tape strips had been attached were later used to provide electrical connection with a tester for the measurement of photocurrent. Next, the glass pieces were placed in an electric furnace (muffle furnace Model FP-32 by Yamato Science K.K.) where they were fired at 450°C for 30 minutes. The glass pieces were taken out and cooled down whereupon they were immersed for 3 hours in an ethanol solution containing 3x10⁻⁴ mol/l of a dye as shown in Table 2. The dye-adsorbed glass pieces were immersed in 4-tert-butylpyridine for 15 minutes, washed with ethanol and air dried.

### 3. Synthesis of gel electrolyte and fabrication of photo-electrochemical cell

### 3-1. Synthesis of monomer (1): ethylene glycol ethyl carbonate methacrylate

A 500-ml three-necked glass flask equipped with a stirrer, thermometer, and reflux condenser was charged with 26.0 g (0.2 mol) of hydroxyethyl methacrylate, 17.4 g (0.22 mol) of pyridine, and 150 ml of tetrahydrofuran. With an ice bath, the flask was cooled to a temperature of 0 to 5°C, and 23.9 g (0.22 mol) of ethyl chloroformate was added dropwise to the reaction system over 30 minutes. The reaction system was then heated at 60°C and stirred for 2 hours.

After the reaction solution was cooled to room temperature, it was subjected to separation and extraction using ethyl acetate and ion-exchanged water, and magnesium sulfate was added to the ethyl acetate layer. The ethyl acetate layer was concentrated and then distilled in vacuum, yielding 40.4 g (yield about 59%) of the above monomer.

Carbonate group-containing monomers having similar structures were similarly synthesized.

### 3-2. Synthesis of monomer (2): N-vinyl-N'-ethylimidazolium iodide

A 200-ml three-necked glass flask equipped with a stirrer, thermometer, and reflux condenser was charged with 50 g (0.32 mol) of ethane iodide and 0.1 g of nitrobenzene. With stirring at room temperature. 7.5 g (0.08 mol) of vinyl imidazole was added dropwise to the reaction system over 20 minutes. The reaction system was then heated at 80°C and stirred for 4 hours.

After the reaction solution was cooled to room temperature, it was worked up by silica gel chromatography (mobile phase: methylene chloride/methanol = 8/2), obtaining 15.8 g (yield about 79%) of the above compound as yellow crystals.

Quaternary ammonium salt-containing monomers having similar structures were similarly synthesized.

### 3-3. Fabrication of photo-electrochemical cell comprising a gel electrolyte layer

By mixing 60 mg of ethylene glycol ethyl carbonate methacrylate, 60 mg of 2-ethoxyethyl methacrylate, 20 mg of tri(ethylene glycol) dimethacrylate, 1.43 mg (1 wt% based on the monomers) of dimethyl-2,2'-azobis(2-methyl propionate) as a plymerization initiator, 1.86 g of 3-methyl-2-oxazolidinone, and 0.112 g of lithium iodide, a homogeneous solution was obtained. Argon gas was bubbled into the solution for 5 minutes. After a counter electrode having platinum deposited thereon was rested on a dye-carrying TiO₂ electrode, the solution was introduced into this assembly under the impetus of an osmotic pressure. The assembly was heated at 85°C for 3 hours in an argon atmosphere for converting the electrolyte into a gel, obtaining a photo-electrochemical cell.

Cells were also fabricated by repeating the above steps while changing the combination of the dye and the gel electrolyte as shown in Table 2.

The cells fabricated in this example are photo-electrochemical cells in which a conductive glass 1 (having a conductive layer 2), a TiO₂ electrode 3, a dye layer 4, a gel electrolyte layer 5, a counter electrode 6, and a platinum-deposited glass plate 7 are stacked in the described order as shown in FIG. 1.

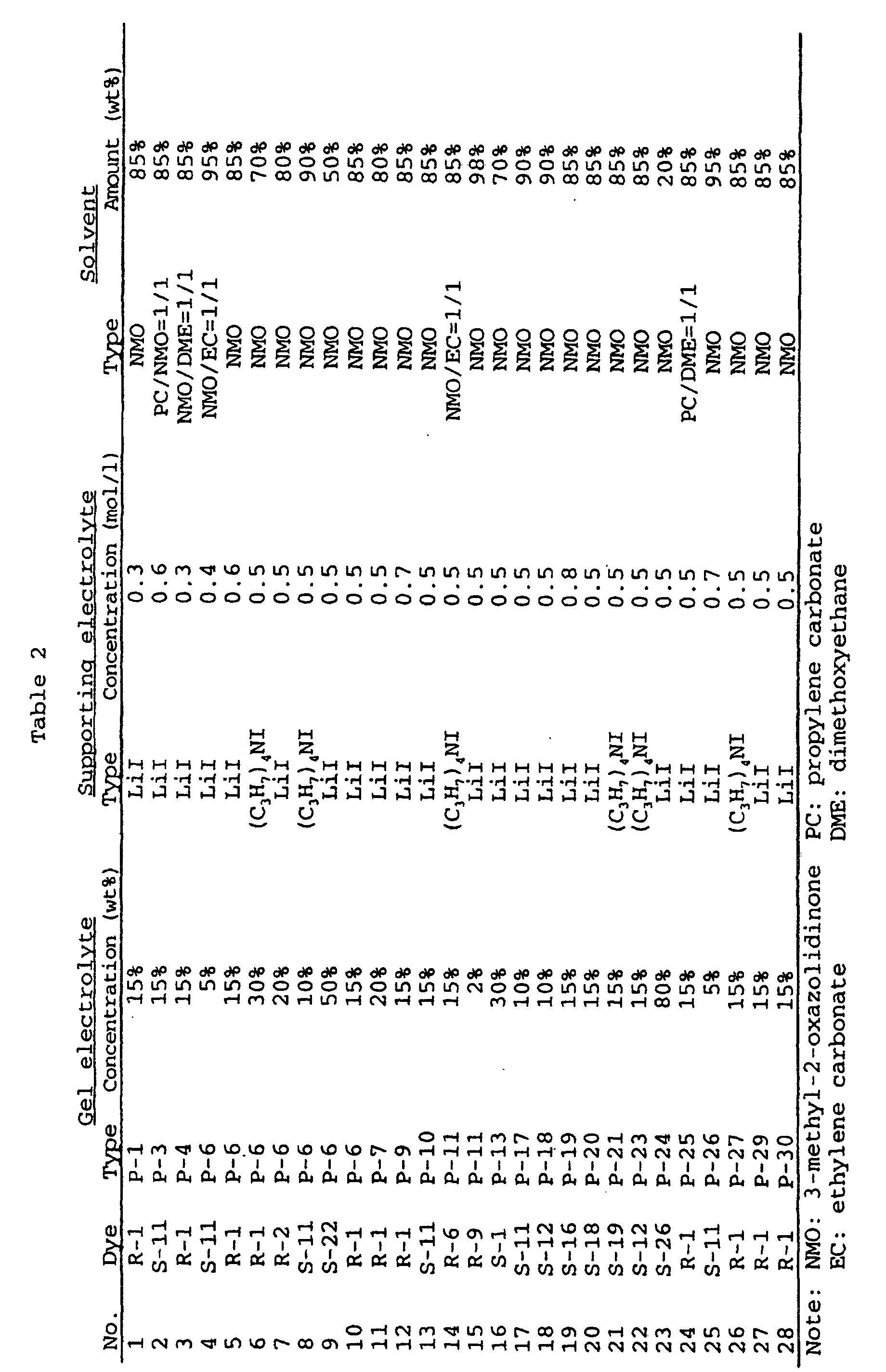

### Measurement of photoelectric conversion efficiency

Light of a 500-W xenon lamp (Ushio K.K.) was passed through a AM 1.5 filter (by Oriel Co.) and a sharp cut filter Kenko L-42, obtaining simulated sunlight free of ultraviolet radiation. The intensity of light was 86 mW/cm².

With clips connected to the conductive glass substrate of the photoelectric conversion device and the platinum-deposited glass member, the simulated sunlight was irradiated to the cell. The electricity generated in the cell was measured by a current-voltage tester (Keithley SMU238). The open circuit voltage (Voc), short-circuit current density (Jsc), fill factor (ff), and conversion efficiency (η) of this solar battery were reported in Table 3 along with the short-circuit current density after 120 hours of continuous irradiation and a percent drop thereof. Note that the percent drop of short-circuit current density is calculated according to [1 - (Jsc after 120 hr.)/(initial Jsc)]xl00. Additionally, the film surface was examined for tack. The results are shown in Table 3.

### Comparative Example 1

On the dye-sensitized TiO₂ electrode substrate (Electrode A, 20 mm x 20 mm) prepared in Example 1 was rested a platinum-deposited glass member of the same size (see FIG. 1). By utilizing a capillary phenomenon, an electrolytic solution was penetrated into the interface or space between the glass plates. The electrolytic solution contained 0.05 mol/1 of iodine and 0.5 mol/l of lithium iodide in a mixture of acetonitrile and 3-methyl-2-oxazolidinone in a volume ratio of 90:10. A comparative photo-electrochemical battery A was fabricated in this way.

### Comparative Example 2

A mix solution was prepared by mixing 1 g of hexaethylene glycol methacrylate (Blenmer PE350 by Nippon Oil & Fats K.K.), 1 g of ethylene glycol, and 20 mg of 2-hydroxy-2-methyl-1-phenyl-propan-1-one (Darocure 1173 by Nippon Ciba Geigy K.K.) as a polymerization initiator, dissolving 500 mg of lithium iodide in the solution, and deaerating in vacuum for 10 minutes. This mix solution was applied onto the dye-sensitized TiO₂ electrode substrate (Electrode A, 20 mm x 20 mm) prepared in Example 1. The porous material having the mix solution coated thereon was placed in vacuum for removing bubbles from the porous material and helping the monomer to penetrate. Thereafter, ultraviolet radiation was irradiated to effect polymerization, thereby distributing a uniform gel of polymer in pores of the porous material. The thus obtained material was exposed to an iodine atmosphere for 30 minutes whereby iodine was diffused into the polymer. A comparative photo-electrochemical battery B was fabricated in this way.

### Comparative Example 3

A mix solution was prepared by mixing 1 g of hexaethylene glycol methacrylate (Blenmer PE350 by Nippon Oil & Fats K.K.), 100 mg of tetraethylene glycol diacrylate, 3 g of propylene carbonate as a solvent in which the electrolyte could be dissolved, and 20 mg of 2-hydroxy-2-methyl-1-phenyl-propan-1-one (Darocure 1173 by Nippon Ciba Geigy K.K.) as a polymerization initiator, dissolving 500 mg of lithium iodide in the solution, and deaerating in vacuum for 10 minutes. This mix solution was applied onto the dye-sensitized TiO₂ electrode substrate (Electrode A, 20 mm x 20 mm) prepared in Example 1. The porous material having the mix solution coated thereon was placed in vacuum for removing bubbles from the porous material and helping the monomer to penetrate. Thereafter, ultraviolet radiation was irradiated to effect polymerization. The thus obtained device was exposed to an iodine atmosphere for 30 minutes. A comparative photo-electrochemical battery C was fabricated in this way.

These comparative batteries A, B, and C were tested as in Example 1. The results are also shown in Table 3.

**Table 3**

| No. | Jsc (µA/cm²) | Voc (V) | ff | η (%) | Jsc after 120 hr. | Jsc drop (%) | Surface tack |
|---|---|---|---|---|---|---|---|
| 1 | 216 | 0.60 | 0.67 | 0.10 | 184 | 15 | tack-free |
| 2 | 416 | 0.65 | 0.70 | 0.22 | 362 | 13 | tack-free |
| 3 | 230 | 0.70 | 0.64 | 0.12 | 189 | 18 | tack-free |
| 4 | 216 | 0.62 | 0.72 | 0.11 | 199 | 8 | tack-free |
| 5 | 523 | 0.75 | 0.66 | 0.30 | 492 | 6 | tack-free |
| 6 | 236 | 0.72 | 0.65 | 0.13 | 229 | 3 | tack-free |
| 7 | 387 | 0.68 | 0.69 | 0.21 | 325 | 16 | tack-free |
| 8 | 264 | 0.64 | 0.63 | 0.12 | 224 | 15 | tack-free |
| 9 | 326 | 0.68 | 0.60 | 0.15 | 271 | 17 | tack-free |
| 10 | 486 | 0.62 | 0.59 | 0.21 | 408 | 16 | tack-free |
| 11 | 373 | 0.58 | 0.71 | 0.18 | 328 | 12 | tack-free |
| 12 | 449 | 0.66 | 0.70 | 0.24 | 368 | 18 | tack-free |
| 13 | 342 | 0.53 | 0.68 | 0.14 | 287 | 16 | tack-free |
| 14 | 232 | 0.70 | 0.63 | 0.12 | 197 | 15 | tack-free |
| 15 | 413 | 0.69 | 0.66 | 0.22 | 355 | 14 | tack-free |
| 16 | 262 | 0.63 | 0.67 | 0.13 | 215 | 18 | tack-free |
| 17 | 335 | 0.72 | 0.60 | 0.17 | 281 | 16 | tack-free |
| 18 | 254 | 0.63 | 0.58 | 0.11 | 211 | 17 | tack-free |
| 19 | 249 | 0.68 | 0.70 | 0.14 | 212 | 15 | tack-free |
| 20 | 320 | 0.69 | 0.63 | 0.16 | 291 | 9 | tack-free |
| 21 | 286 | 0.72 | 0.62 | 0.15 | 255 | 11 | tack-free |
| 22 | 233 | 0.62 | 0.63 | 0.11 | 179 | 23 | tack-free |
| 23 | 287 | 0.63 | 0.64 | 0.13 | 232 | 19 | tack-free |
| 24 | 319 | 0.70 | 0.66 | 0.17 | 268 | 16 | tack-free |
| 25 | 253 | 0.60 | 0.62 | 0.11 | 220 | 13 | tack-free |
| 26 | 212 | 0.68 | 0.69 | 0.12 | 187 | 12 | tack-free |
| 27 | 352 | 0.70 | 0.69 | 0.20 | 313 | 11 | tack-free |
| 28 | 316 | 0.68 | 0.61 | 0.15 | 259 | 18 | tack-free |
| Comparative solar battery A | 2800 | 0.60 | 0.43 | 0.84 | 252 | 91 | tacky (liquid) |
| Comparative solar battery B | 153 | 0.35 | 0.50 | 0.03 | 101 | 34 | tacky |
| Comparative solar battery C | 198 | 0.42 | 0.58 | 0.06 | 152 | 23 | tacky |

As compared with wet solar batteries of Comparative Examples, the batteries in Example 1 experience little deterioration of photoelectric conversion properties and little change with time and remain tack-free on their surface.

The invention provides a photoelectric conversion device which has improved photoelectric conversion properties, minimized in leakage of electrolytic solution and deterioration with time of properties concomitant therewith, and is tack-free on its surface.

Reasonable modifications and variations are possible from the foregoing disclosure without departing from the scope of the present invention as defined by the claims.

## Claims

1. A photoelectric conversion device comprising a conductive support (1, 2), a layer coated on the conductive support and containing semiconductor nanoparticulates having a dye adsorbed thereto, a gel electrolyte layer (5) containing a gel and an electrolyte, and a counter electrode (6), wherein
the gel of the gel electrolyte-containing layer contains constituent units of at least one type having a monovalent organic residue selected from among a carbonate group, a heterocyclic group containing a nitrogen atom, and a quaternary ammonium salt.

2. The photoelectric conversion device of claim 1, wherein the gel is a crosslinked polymer containing constituent units of at least one type having a monovalent organic residue selected from among a carbonate group, a heterocyclic group containing a nitrogen atom, and a quaternary ammonium salt.

3. The photoelectric conversion device of claim 2, wherein the constituent units of the crosslinked polymer originate from an ethylenically unsaturated monomer.

4. The photoelectric conversion device of claim 3, wherein the ethylenically unsaturated monomer is at least one ethylenically unsaturated monomer having as a substituent a monovalent organic residue selected from among a carbonate group, a heterocyclic group containing a nitrogen atom, and a quaternary ammonium salt.

5. The photoelectric conversion device of claim 4, wherein said crosslinked polymer contains, in a weight compositional ratio, 5 to 99% by weight of recurring units originating from the ethylenically unsaturated monomer.

6. The photoelectric conversion device of claim 4 or 5, wherein said crosslinked polymer containing at least one type of recurring units originating from an ethylenically unsaturated monomer has the following formula (1): 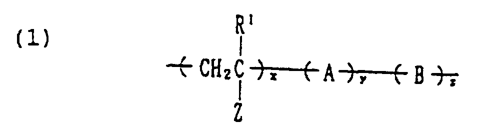 wherein R¹ is hydrogen or alkyl of 1 to 4 carbon atoms, Z is a monovalent organic group containing a functional group selected from among a carbonate group, a heterocyclic group containing a nitrogen atom, and a quaternary ammonium salt, A represents recurring units derived from a compound containing an ethylenically unsaturated group, B represents recurring units derived from a compound containing at least two ethylenically unsaturated groups, letters x, y, and z represent weight compositional ratios of the recurring units associated therewith, respectively, x is from 5% to 99% by weight, y is from 0% to 70% by weight, and z is from 0.5% to 50% by weight.

7. The photoelectric conversion device of claim 6, wherein the ethylenically unsaturated monomer containing Z is at least one member selected from among ethylene glycol carbonate methacrylate, N-vinyl pyrrolidone, N-vinyloxazolidone, and N-vinyl-N'-ethylimidazolium iodide.

8. The photoelectric conversion device of claim 1, wherein said electrolyte is a metal iodide, an iodine salt of a quaternary ammonium compound, a metal bromide, a bromine salt of a quaternary ammonium compound, a sulfur compound, a viologen dye, or hydroquinone-quinone.

9. The photoelectric conversion device of claim 8, wherein said electrolyte is present in a concentration of 0.1 to 1.5 M.

10. The photoelectric conversion device of claim 9, wherein said electrolyte is a supporting electrolyte containing an iodine salt and/or a metal iodide.

11. The photoelectric conversion device of any one of claims 1 to 10, wherein the crosslinked polymer accounts for a weight fraction of 2% to 80% by weight of said gel electrolyte.

12. The photoelectric conversion device of any one of claims 1 to 11, wherein said gel electrolyte contains at least one organic solvent selected from among a nitrile compound, a carbonate compound, a nitrogenous heterocyclic compound, and an ethylene glycol dialkyl ether.

13. The photoelectric conversion device of any one of claims 1 to 12, wherein said gel electrolyte has been prepared by radical polymerization of a mixture containing a vinyl monomer, a polymerization initiator, a supporting electrolyte, and a solvent.

14. The photoelectric conversion device of any one of claims 1 to 13, wherein said dye is a ruthenium complex dye or polymethine dye.

15. A photo-electrochemical cell comprising the photoelectric conversion device of any one of claims 1 to 14.

## Patentansprüche

1. Fotoelektrische Umwandlungsvorrichtung, aufweisend einen leitfähigen Träger (1, 2), eine auf den leitfähigen Träger abgeschiedene Schicht, die Halbleiternanopartikel enthält, an die ein Farbstoff adsorbiert ist, eine Gelelektrolytschicht (5), die ein Gel und einen Elektrolyten enthält, und eine Gegenelektrode (6), wobei
das Gel der Gelelektrolytschicht Bestandteileinheiten zumindest eines Typs enthält, der einen einwertigen organischen Rest aufweist, der ausgewählt ist aus einer Karbonatgruppe, einer heterozyklischen Gruppe, enthaltend ein Stickstoffatom, und einem quaternären Ammoniumsalz.

2. Fotoelektrische Umwandlungsvorrichtung nach Anspruch 1, wobei das Gel ein vernetztes Polymer ist, das Bestandteileinheiten zumindest eines Typs enthält, der einen einwertigen organischen Rest aufweist, der ausgewählt ist aus einer Karbonatgruppe, einer heterozyklischen Gruppe, enthaltend ein Stickstoffatom, und einem quaternären Ammoniumsalz.

3. Fotoelektrische Umwandlungsvorrichtung nach Anspruch 2, wobei die Bestandteileinheiten des vernetzten Polymers herrühren aus einem ethylenisch ungesättigten Monomer.

4. Fotoelektrische Umwandlungsvorrichtung nach Anspruch 3, wobei das ethylenisch ungesättigte Monomer zumindest ein ethylenisch ungesättigtes Monomer ist, das als Substituenten einen einwertigen organischen Rest aufweist, der ausgewählt ist aus einer Karbonatgruppe, einer heterozyklischen Gruppe, enthaltend ein Stickstoffatom, und einem quaternären Ammoniumsalz.

5. Fotoelektrische Umwandlungsvorrichtung nach Anspruch 4, wobei das vernetzte Polymer in einem Gewichtszusammensetzungsverhältnis 5 bis 99 Gew.-% periodische Einheiten enthält, die herrühren aus dem ethylenisch ungesättigten Monomer.

6. Fotoelektrische Umwandlungsvorrichtung nach Anspruch 4 oder 5, wobei das vernetzte Polymer zumindest einen Typ von periodischen Einheiten enthält, die herrühren aus einem ethylenisch ungesättigten Monomer, das die folgende Formel (1) aufweist: 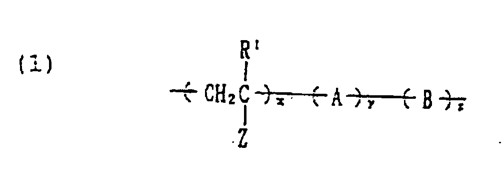 wobei R¹ Wasserstoff oder ein Alkyl mit 1 bis 4 Kohlenstoffatomen ist, wobei Z eine einwertige organische Gruppe ist, enthaltend eine funktionale Gruppe, die ausgewählt ist aus einer Karbonatgruppe, einer heterozyklischen Gruppe, enthaltend ein Stickstoffatom, und einem quaternären Ammoniumsalz, A periodische Einheiten darstellt, die abgeleitet sind von einer Verbindung, enthaltend eine ethylenisch ungesättigte Gruppe, B periodische Einheiten darstellt, abgeleitet von einer Verbindung, enthaltend zumindest zwei ethylenisch ungesättigte Gruppen, die Buchstaben x, y und z Gewichtszusammensetzungsverhältnisse der periodischen Einheiten darstellen, die damit verbunden sind, x von 5 bis 99 Gew.-% beträgt, y von 0 bis 70 Gew.-% beträgt und z von 0,5 bis 50 Gew.-% beträgt.

7. Fotoelektrische Umwandlungsvorrichtung nach Anspruch 6, wobei das ethylenisch ungesättigte Monomer, das Z enthält, zumindest ein Element ist, das ausgewählt ist aus einem Ethylenglykolkarbonatmethacrylat, N-Vinylpyrrolidon, N-Vinyloxazolidon und N-Vinyl-N'-Ethylimidazoliumjodid.

8. Fotoelektrische Umwandlungsvorrichtung nach Anspruch 1, wobei der Elektrolyt ein Metalljodid, ein Jodsalz einer quaternären Ammoniumverbindung, ein Metallbromid, ein Bromsalz einer quaternären Ammoniumverbindung, eine Schwefelverbindung, ein viologenfarbstoff bzw. Hydroquinon-Quinon ist.

9. Fotoelektrische Umwandlungsvorrichtung nach Anspruch 8, wobei der Elektrolyt in einer Konzentration von 0,1 bis 1,5 M vorliegt.

10. Fotoelektrische Umwandlungsvorrichtung nach Anspruch 9, wobei der Elektrolyte ein Trägerelektrolyt ist, der ein Jodsalz und/oder ein Metalljodid enthält.

11. Fotoelektrische Umwandlungsvorrichtung nach einem der Ansprüche 1 bis 10, wobei das vernetzte Polymer mit einer Gewichtsfraktion von 2 bis 80 Gew.-% bezogen auf den Gelelektrolyen vorliegt.

12. Fotoelektrische Umwandlungsvorrichtung nach einem der Ansprüche 1 bis 11, wobei der Gelelektrolyt zumindest ein organisches Lösungsmittel enthält, das ausgewählt ist aus einer Nitrilverbindung, einer Karbonatverbindung, einer stickstoffhaltigen heterozyklischen Verbindung und einem Ethylenglykoldialkylether.

13. Fotoelektrische Umwandlungsvorrichtung nach einem der Ansprüche 1 bis 12, wobei der Gelelektrolyt zubereitet wurde durch Radikalpolymerisierung einer Gemisches, enthaltend ein Vinylmonomer, einen Polymerisationsinitiator, einen Trägerelektrolyten und ein Lösungsmittel.

14. Fotoelektrische Umwandlungsvorrichtung nach einem der Ansprüche 1 bis 13, wobei der Farbstoff ein Rutheniumkomplexfarbstoff bzw. ein Polymethinfarbstoff ist.

15. Fotoelektrochemische Zelle, aufweisend die fotoelektrische Umwandlungsvorrichtung nach einem der Ansprüche 1 bis 14.

## Revendications

1. Dispositif de conversion photoélectrique comprenant un support conducteur (1, 2), une couche appliquée sur le support conducteur et contenant des nanoparticules semi-conductrices sur lesquelles est adsorbé un colorant, une couche de gel-électrolyte (5) contenant un gel et un électrolyte et une contre-électrode (6), où
le gel de la couche contenant un gel-électrolyte contient des unités constitutives d'au moins un type ayant un résidu organique monovalent choisi parmi un groupe carbonate, un groupe hétérocyclique contenant un atome d'azote et un sel d'ammonium quaternaire.

2. Dispositif de conversion photoélectrique selon la revendication 1, où le gel est un polymère réticulé contenant des unités constitutives d'au moins un type ayant un résidu organique monovalent choisi parmi un groupe carbonate, un groupe hétérocyclique contenant un atome d'azote et un sel d'ammonium quaternaire.

3. Dispositif de conversion photoélectrique selon la revendication 2 où les unités constitutives du polymère réticulé sont issues d'un monomère éthyléniquement insaturé.

4. Dispositif de conversion photoélectrique selon la revendication 3 où le monomère éthyléniquement insaturé est au moins un monomère éthyléniquement insaturé ayant comme substituant un résidu organique monovalent choisi parmi un groupe carbonate, un groupe hétérocyclique contenant un atome d'azote et un sel d'ammonium quaternaire.

5. Dispositif de conversion photoélectrique selon la revendication 4 où ledit polymère réticulé contient, dans un rapport de composition massique, 5 à 99 % en masse d'unités répétées issues du monomère éthyléniquement insaturé.

6. Dispositif de conversion photoélectrique selon la revendication 4 ou 5 où ledit polymère réticulé contenant au moins un type d'unités répétées issues d'un monomère éthyléniquement insaturé a la formule (1) suivante : 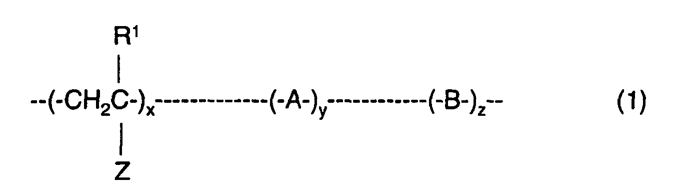 où R¹ est l'hydrogène ou un alkyle de 1 à 4 atomes de carbone, Z est un groupe organique monovalent contenant un groupe fonctionnel choisi parmi un groupe carbonate, un groupe hétérocyclique contenant un atome d'azote et un sel d'ammonium quaternaire, A représente des unités répétées issues d'un composé contenant un groupe éthyléniquement insaturé, B représente des unités répétées issues d'un composé contenant au moins deux groupes éthyléniquement insaturés, les lettres x, y et z représentent les rapports de composition massique des unités répétées associées, respectivement, x est de 5 % à 99 % en masse, y est de 0 % à 70 % en masse et z est de 0,5 % à 50 % en masse.

7. Dispositif de conversion photoélectrique selon la revendication 6 où le monomère éthyléniquement insaturé contenant Z est au moins un membre choisi parmi le carbonate-méthacrylate d'éthylèneglycol, la N-vinylpyrrolidone, la N-vinyloxazolidone et l'iodure de N-vinyl-N'-éthylimidazolium.

8. Dispositif de conversion photoélectrique selon la revendication 1 où ledit électrolyte est un iodure métallique, un sel d'iode d'un composé d'ammonium quaternaire, un bromure métallique, un sel de brome d'un composé d'ammonium quaternaire, un composé soufré, un colorant viologène ou l'hydroquinone-quinone.

9. Dispositif de conversion photoélectrique selon la revendication 8 où ledit électrolyte est présent en une concentration de 0,1 à 1,5 M.

10. Dispositif de conversion photoélectrique selon la revendication 9 où ledit électrolyte est un électrolyte de soutien contenant un sel d'iode et/ou un iodure métallique.

11. Dispositif de conversion photoélectrique selon l'une quelconque des revendications 1 à 10 où le polymère réticulé représente une fraction massique de 2 % à 80 % en masse dudit gel-électrolyte.

12. Dispositif de conversion photoélectrique selon l'une quelconque des revendications 1 à 11 où ledit gel-électrolyte contient au moins un solvant organique choisi parmi un composé nitrile, un composé carbonate, un composé hétérocyclique azoté et un dialkyléther d'éthylèneglycol.

13. Dispositif de conversion photoélectrique selon l'une quelconque des revendications 1 à 12 où ledit gel-électrolyte a été préparé par polymérisation radicalaire d'un mélange contenant un monomère vinylique, un initiateur de polymérisation, un électrolyte de soutien et un solvant.

14. Dispositif de conversion photoélectrique selon l'une quelconque des revendications 1 à 13 où ledit colorant est un colorant à complexe de ruthénium ou un colorant polyméthinique.

15. Cellule photoélectrochimique comprenant le dispositif de conversion photoélectrique selon l'une quelconque des revendications 1 à 14.
